# EUROPEAN PATENT SPECIFICATION

(11) **EP 3 916 260 B1**
(45) Date of publication and mention of the grant of the patent: **04.10.2023**
(21) Application number: 21174355.4
(22) Date of filing: 18.05.2021
(51) Int. Cl.: F16D 43/14

(54) **CENTRIFUGAL CLUTCH, AND A STRADDLED VEHICLE HAVING THE CENTRIFUGAL CLUTCH**
ZENTRIFUGALKUPPLUNG UND GRÄTSCHSITZFAHRZEUG MIT DER ZENTRIFUGALKUPPLUNG
EMBRAYAGE CENTRIFUGE ET VÉHICULE À CALIFOURCHON COMPRENANT L'EMBRAYAGE CENTRIFUGE

(30) Priority: 29.05.2020 JP 2020094785
(43) Date of publication of application: 01.12.2021
(73) Proprietor: YAMAHA HATSUDOKI KABUSHIKI KAISHA, Iwata-shi, Shizuoka-ken 438-8501 (JP)
(72) Inventor: ITO, Junichi, Shizuoka (JP); MASUI, Yasuto, Shizuoka (JP)
(74) Representative: Grünecker Patent- und Rechtsanwälte PartG mbB

(56) References cited:
- WO-A1-2016/132636
- JP-A- H0 861 383
- JP-A- H0 861 384
- JP-A- 2006 071 096

## Description

This invention relates to a centrifugal clutch, a straddled vehicle having the centrifugal clutch, and a method for manufacturing the centrifugal clutch.

JP 2006 071096 A discloses a two-wheeled motor vehicle. Description will be made hereunder showing, in parentheses, the same reference signs as used in the above patent publication. The two-wheeled motor vehicle (100) includes a centrifugal clutch (11). The centrifugal clutch (11) has centrifugal shoes (13) and a clutch housing (12). The clutch housing (12) has a cylindrical portion (12a) and a bottom plate (12b). The centrifugal shoes (13) contact the cylindrical portion (12a). The bottom plate (12b) covers one end of the cylindrical portion (12a).

The centrifugal clutch (11) has a vibration proofing cover (17). The vibration proofing cover (17) has a side edge (17a) and a bottom (17b). The side edge (17a) has projections (22). The projections (22) contact the cylindrical portion (12a). The bottom (17b) is melt-joined by spot welding to the bottom plate (12b). Here, spot welding is resistance welding. In particular, JP 2006 071096 A discloses a centrifugal clutch according to the preamble of claim 1.

The centrifugal clutch is required to provide the following functions, for example:
a) friction characteristics between the clutch housing and centrifugal shoes;
b) suppressing vibration of the clutch housing;
c) preventing rusting of the clutch housing; and
d) preventing rusting of the vibration proofing cover.

In order to improve these functions, Inventors herein have studied property modifications of the surfaces of the clutch housing, and property modifications of the surfaces of the vibration proofing cover, for example.

As a result of these studies, Inventors have found a new problem. Specifically, Inventors have found that a new problem arises from property modifications of at least either the surfaces of the clutch housing or the surfaces of the vibration proofing cover. The new problem is that there is a possibility of resistance welding becoming unsuitable for fusion joining between the clutch housing and vibration proofing cover. For example, the quality of resistance welding becomes difficult to secure. For example, the set tolerance range of non-defective product conditions in resistance welding becomes narrow. Further, fusion zone can become unstable even when the current, weld time, load, and so on are made constant. Consequently, the electrode used in resistance welding can be markedly worn, thereby to shorten the life of the electrode. When the electrode used in resistance welding wears easily, there arises a concern about the fusion zone becoming still more unstable.

This invention has been made having regard to the state of the art noted above, and its object is to provide a centrifugal clutch capable of appropriately joining a clutch housing and a vibration proofing cover, and a straddled vehicle having such centrifugal clutch.

In order to fulfill the above object, a centrifugal clutch according to claim 1 is provided. This invention provides the following construction.

A centrifugal clutch according to this invention comprises:
centrifugal shoes revolvable about a first axis and movable by centrifugal force radially outward of the first axis;
a clutch housing having a first cylindrical portion located radially outward of the first axis relative to the centrifugal shoes to be capable of contacting and separating from the centrifugal shoes, and a bottom portion extending from the first cylindrical portion radially inward of the first axis; and
a vibration proofing cover having a second cylindrical portion located radially outward of the first axis relative to the first cylindrical portion and in contact with part of the first cylindrical portion, and a fixed portion extending from the second cylindrical portion radially inward of the first axis and crimped to the bottom portion.

The centrifugal clutch includes centrifugal shoes. The centrifugal shoes revolve about the first axis. The centrifugal shoes are movable by centrifugal force radially outward of the first axis. The centrifugal clutch includes a clutch housing. The clutch housing has a first cylindrical portion. The first cylindrical portion is located radially outward of the first axis relative to the centrifugal shoes. The first cylindrical portion can contact the centrifugal shoes. This can appropriately engage power transmission between the centrifugal shoes and clutch housing. The first cylindrical portion can separate from the centrifugal shoes. This can appropriately disengage power transmission between the centrifugal shoes and clutch housing.

The centrifugal clutch includes a vibration proofing cover. The vibration proofing cover has a second cylindrical portion. The second cylindrical portion is located radially outward of the first axis relative to the first cylindrical portion. The second cylindrical portion contacts part of the first cylindrical portion. The vibration proofing cover can therefore appropriately suppress vibration of the first cylindrical portion.

The clutch housing has a bottom portion. The bottom portion extends from the first cylindrical portion radially inward toward the first axis. The vibration proofing cover has a fixed portion. The fixed portion extends from the second cylindrical portion radially inward toward the first axis. The fixed portion is crimped to the bottom portion. The clutch housing and the vibration proofing cover can therefore appropriately be joined together.

In the above centrifugal clutch, it is preferred that the fixed portion is fixed to the bottom portion by plastic processing.

The plastic processing can appropriately fix the clutch housing and vibration proofing cover together.

In the above centrifugal clutch, it is preferred that the fixed portion is fixed to the bottom portion by press processing.

The press processing can appropriately fix the clutch housing and vibration proofing cover together.

It is preferred that the above centrifugal clutch comprises:
pins penetrating the fixed portion; and
heads connected to the pins for pressing the fixed portion on the bottom portion.

The pins and heads can appropriately join the fixed portion and bottom portion together.

In the above centrifugal clutch, it is preferred that:
the pins extend parallel to the first axis;
the bottom portion, the fixed portion, and the heads are arranged in the stated order axially of the first axis;
the fixed portion contacts the bottom portion and the heads; and
at least part of the heads overlap both the fixed portion and the bottom portion as seen from the first axis.

The pins extend parallel to the first axis. The bottom portion, the fixed portion, and the heads are arranged in the stated order along the first axis. Thus, the pins can appropriately penetrate the fixed portion. Further, the pins can appropriately join with the heads. The fixed portion contacts the bottom portion. The fixed portion contacts the heads. At least part of the heads overlap both the fixed portion and the bottom portion as seen from the first axis. The heads can therefore appropriately press the fixed portion on the bottom portion.

In the above centrifugal clutch, it is preferred that the pins and the heads are integrated with the bottom portion.

This can simplify the construction of the centrifugal clutch.

In the above centrifugal clutch, it is preferred that the bottom portion has a thickness larger than a thickness of the fixed portion.

The pins and the heads are integrated with the bottom portion. The pins and the heads can be provided appropriately. More particularly, since the thickness of the bottom portion is relatively large, the pins and the heads can easily be integrated with the bottom portion. For example, the pins and the heads can be formed appropriately.

In the above centrifugal clutch, it is preferred that the bottom portion has recesses arranged on back sides of the pins; and
the pins are formed to project from the bottom portion simultaneously with formation of the recesses.

The pins can be formed conveniently.

In the above centrifugal clutch, it is preferred that the pins have an outside diameter smaller than an inside diameter of the recesses.

The outside diameter of the pins is smaller than the inside diameter of the recesses. Therefore, for example, the length of the pins can easily be secured by plastic deformation of the material.

The pins can therefore penetrate the fixed portion conveniently. On the other hand, the inside diameter of the recesses is larger than the outside diameter of the pins. Therefore, the depth of the recesses can easily be made small. This can prevent excessive lowering of the strength of the bottom portion.

In the above centrifugal clutch, it is preferred that the recesses have a depth smaller than the thickness of the bottom portion.

This can conveniently secure the strength of the bottom portion.

In the above centrifugal clutch, it is preferred that the heads are formed by applying load to distal ends of the pins.

The heads can conveniently formed by crimping.

In the above centrifugal clutch, it is preferred that the heads are formed after the vibration proofing cover is attached to the clutch housing.

The heads can conveniently cause the fixed portion to contact the bottom portion. Further, the heads can conveniently press the fixed portion on the bottom portion.

In the above centrifugal clutch, it is preferred that at least one of the clutch housing and the vibration proofing cover is surface-treated.

Surface treatment can be performed as necessary for at least one of the clutch housing and the vibration proofing cover. This can conveniently improve the function of the centrifugal clutch.

In the above centrifugal clutch, it can be preferable that at least one of the clutch housing and the vibration proofing cover is not surface-treated.

In certain cases, the function of the centrifugal clutch can conveniently be improved by giving no surface treatment to at least one of the clutch housing and the vibration proofing cover.

In the above centrifugal clutch, it is preferred that:
the clutch housing is surface-treated in a state not attached to the vibration proofing cover; and
the vibration proofing cover is attached to the clutch housing after the clutch housing is surface-treated.

This can conveniently prevent distortion of the clutch housing. As a result, the accuracy of the relative position between the clutch housing and vibration proofing cover can be secured conveniently. In particular, the accuracy of the relative position between the first cylindrical portion and second cylindrical portion can be secured conveniently. Therefore, vibration of the first cylindrical portion can be suppressed conveniently.

In the above centrifugal clutch, it is preferred that:
the vibration proofing cover is surface-treated in a state not attached to the clutch housing; and
the vibration proofing cover is attached to the clutch housing after the vibration proofing cover is surface-treated.

This can conveniently prevent distortion of the vibration proofing cover. As a result, the accuracy of the relative position between the clutch housing and vibration proofing cover can be secured conveniently. In particular, the accuracy of the relative position between the first cylindrical portion and second cylindrical portion can be secured conveniently. Therefore, the second cylindrical portion can conveniently suppress vibration of the first cylindrical portion.

This invention also provides a straddled vehicle comprising the centrifugal clutch as described above.

According to this straddled vehicle, the clutch housing and vibration proofing cover can be joined together appropriately. Furthermore, the present invention also considers any method for manufacturing a centrifugal clutch according to the above aspects by any of the above method related features.

For the purpose of illustrating the invention, there are shown in the drawings several forms which are presently preferred, it being understood, however, that the invention is not limited to the precise arrangement and instrumentalities shown.
Fig. 1 is a left side view of a straddled vehicle according to an embodiment.
Fig. 2 is a horizontal sectional view of a transmission.
Fig. 3 is a view of centrifugal shoes seen axially of a second output shaft.
Fig. 4A is a horizontal sectional view of a clutch housing.
Fig. 4B is a view of the clutch housing seen from direction B shown in Fig. 4A.
Fig. 5A is a horizontal sectional view of a vibration proofing cover.
Fig. 5B is a view of the vibration proofing cover seen from direction B shown in Fig. 5A.
Fig. 6A is a horizontal sectional view of the clutch housing and vibration proofing cover.
Fig. 6B is a view of the clutch housing and vibration proofing cover seen from direction B1 shown in Fig. 6A.
Fig. 7 is a view of the clutch housing and vibration proofing cover seen from direction B2 shown in Fig. 6A.
Fig. 8 is a sectional view taken on line VIII-VIII of Fig. 6B.
Fig. 9 is a sectional view showing forming of the clutch housing.
Fig. 10 is a sectional view of the vibration proofing cover.
Fig. 11 is a sectional view schematically showing the clutch housing and vibration proofing cover (including surface treatment).
Fig. 12 is a flow chart showing a procedure for processing and assembly of the clutch housing and vibration proofing cover.
Fig. 13 is a sectional view illustrating crimps between a bottom portion and a fixed portion in a modified embodiment.
Fig. 14 is a sectional view illustrating crimps between the bottom portion and fixed portion in a modified embodiment.

A straddled vehicle 1 according to this invention will be described hereinafter with reference to the drawings.

### 1. Outline construction of the straddled vehicle 1

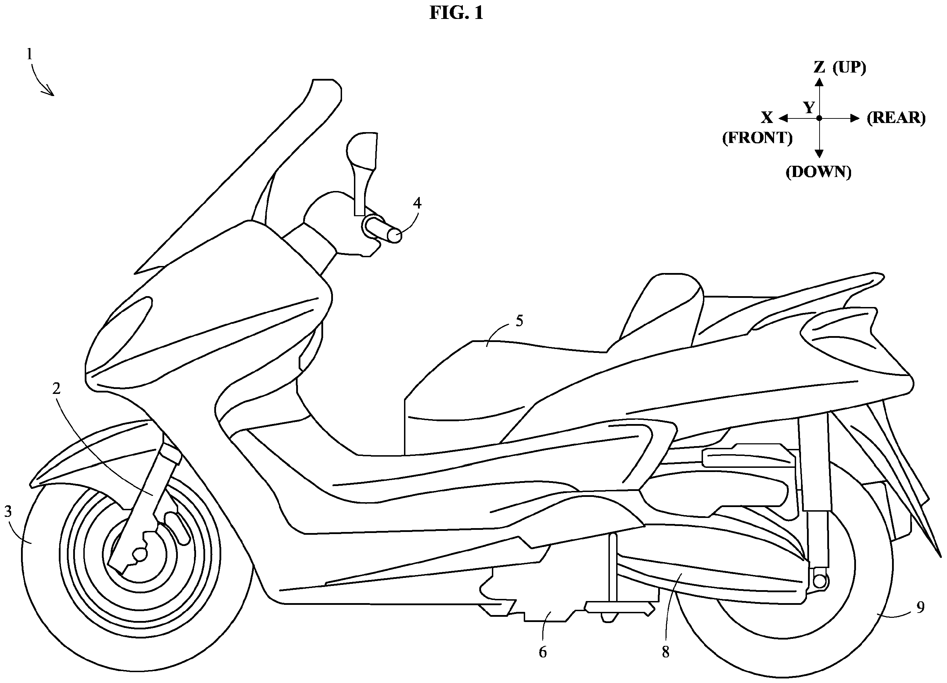

Fig. 1 is a left side view of a straddled vehicle according to an embodiment.

Fig. 1 shows a longitudinal direction X, a transverse direction Y, and an up-down direction Z of the straddled vehicle 1. The longitudinal direction X, transverse direction Y, and up-down direction Z are defined with reference to the driver (or rider) mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions approximate to the longitudinal direction X. The directions approximate to the longitudinal direction X are, for example, directions at angles not exceeding 45 degrees to the longitudinal direction X. Similarly, unless otherwise stated, "rightward" and "leftward" include not only directions parallel to the transverse direction Y but also directions approximate to the transverse direction Y. Unless otherwise stated, the "upward" and "downward" include not only directions parallel to the up-down direction Z but also directions approximate to the up-down direction Z. For reference, the drawings show front, rear, up, down, right, and left, as appropriate.

This specification uses various expressions describing arrangements, which have the following meanings, respectively. The following description will be made taking the transverse direction Y for example, and the same may be applied to the longitudinal direction X and up-down direction Z.

The expression "Member Ma is located more rightward/leftward than member Mb," defines a position in the transverse direction Y of member Ma relative to member Mb, and does not define a position in the longitudinal direction X or the up-down direction Z of member Ma relative to member Mb. In the case of this expression, member Ma may, or may not, overlap member Mb in a side view of the vehicle.

The expression "Member Ma is located rightward/leftward of member Mb," without reference to a looking direction defines a position in the transverse direction Y of member Ma relative to member Mb, a position in the longitudinal direction X of member Ma relative to member Mb, and a position in the up-down direction Z of member Ma relative to member Mb. This expression means that member Ma is located more rightward/leftward than member Mb, and that at least part of member Ma overlaps at least part of member Mb in a side view of the vehicle.

The expression "Member Ma is located rightward/leftward of member Mb in a plan view of the vehicle," defines a position in the transverse direction Y of member Ma relative to member Mb, and a position in the longitudinal direction X of member Ma relative to member Mb, and does not define a position in the up-down direction Z of member Ma relative to member Mb. This expression means that member Ma is located more rightward/leftward than member Mb, and that the front end of member Ma is located more forward than the rear end of member Mb, and that the rear end of member Ma is located more rearward than the front end of member Mb.

The expression "Member Ma is located rightward/leftward of member Mb in a front view of the vehicle," defines a position in the transverse direction Y of member Ma relative to member Mb, and a position in the up-down direction Z of member Ma relative to member Mb, and does not define a position in the longitudinal direction X of member Ma relative to member Mb. This expression means that member Ma is located more rightward/leftward than member Mb, that the upper end of member Ma is located higher than the lower end of member Mb, and that the lower end of member Ma is located lower than the upper end of member Mb.

The straddled vehicle 1 is a scooter type vehicle.

The straddled vehicle 1 includes a front fork 2, a front wheel 3, and a handlebar 4. The front fork 2 is disposed at the front of the straddled vehicle 1. The front wheel 3 is supported by the front fork 2. The handlebar 4 is supported by the front fork 2. The handlebar 4 is located higher than the front wheel 3. The driver grasps the handlebar 4.

The straddled vehicle 1 includes a seat 5. The seat 5 is located more rearward than the handlebar 4. The driver sits on the seat 5.

The straddled vehicle 1 includes an engine 6, a transmission 8, and a rear wheel 9. The engine 6 is located below the seat 5. The transmission 8 is located behind the engine 6. The rear wheel 9 is supported by the transmission 8.

The straddled vehicle 1 includes a body frame not shown. The body frame supports the front fork 2, seat 5, engine 6, and transmission 8.

The engine 6 generates power. The transmission 8 transmits power from the engine 6 to the rear wheel 9.

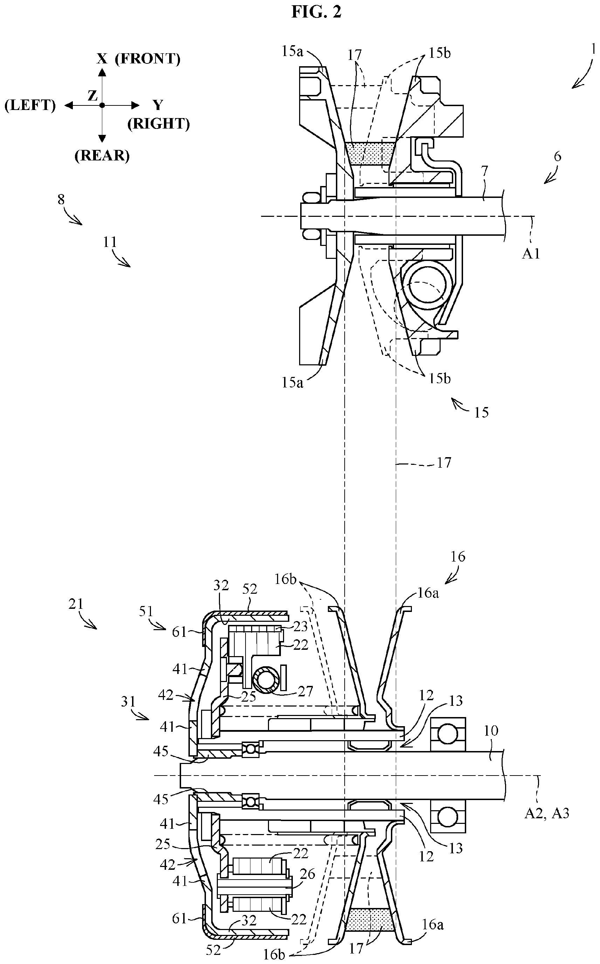

Fig. 2 is a horizontal sectional view of the transmission 8. The engine 6 outputs rotational power. Specifically, the engine 6 has a first output shaft 7. The first output shaft 7 outputs the rotational power. The straddled vehicle 1 includes a rear axle 10. The rear axle 10 transmits power to the rear wheel 9 through gears and a reduction device. The rear wheel 9 is rotatable with the rear axle 10, for example. The transmission 8 transmits the rotational power from the first output shaft 7 to the rear axle 10. The rear wheel 9 is rotated by the power transmitted to the rear axle 10.

The transmission 8 has a speed changer 11. The speed changer 11 receives the rotational power from the first output shaft 7. The speed changer 11 changes rotation speed of the rotational power inputted to the speed changer 11. The speed changer 11 outputs the rotational power at rotation speeds changed.

The transmission 8 has a centrifugal clutch 21. The centrifugal clutch 21 receives the rotational power from the speed changer 11. The centrifugal clutch 21 uses centrifugal force to switch between an engaged state and a disengaged state. When the centrifugal clutch 21 is in the engaged state, the centrifugal clutch 21 transmits the rotational power from the speed changer 11 to the rear axle 10. When the centrifugal clutch 21 is in the disengaged state, the centrifugal clutch 21 does not transmit the rotational power from the speed changer 11 to the rear axle 10.

The constructions of the first output shaft 7, speed changer 11, centrifugal clutch 21, and rear axle 10 will be described specifically. The first output shaft 7 is a crankshaft, for example. The first output shaft 7 has an axis A1. The axis A1 is an imaginary straight line passing through the center of the first output shaft 7. The axis A1 is parallel to the transverse direction Y, for example. The first output shaft 7 rotates about the axis A1.

The speed changer 11 is connected to the first output shaft 7. The rotational power of the first output shaft 7 is inputted to the speed changer 11.

The speed changer 11 has a second output shaft 12. The second output shaft 12 outputs rotational power. The second output shaft 12 has an axis A2. The axis A2 is an imaginary straight line passing through the center of the second output shaft 12. The axis A2 is parallel to the axis A1, for example. The axis A2 is parallel to the transverse direction Y, for example. The second output shaft 12 rotates about the axis A2.

The speed changer 11 is a stepless speed change device. The stepless speed change device is also called a continuously variable transmission. The speed changer 11 continuously changes speed change ratio. The speed change ratio is also called gear ratio. The speed change ratio is a ratio between rotation speed of the first output shaft 7 and rotation speed of the second output shaft 12.

The speed changer 11 has a first pulley 15, a second pulley 16, and a belt 17. The first pulley 15 is mounted on the first output shaft 7. The first pulley 15 is rotatable with the first output shaft 7. The first pulley 15 rotates about the axis A1 of the first output shaft 7. The first pulley 15 receives the rotational power of the first output shaft 7. The second output shaft 12 is, in plan view, located behind the first output shaft 7. The second output shaft 12 has a tubular shape. The second output shaft 12 has a hollow portion 13. The hollow portion 13 is formed inside the second output shaft 12. The second pulley 16 is mounted on the second output shaft 12. The second pulley 16 is rotatable with the second output shaft 12. The second pulley 16 rotates about the axis A2 of the second output shaft 12. The belt 17 is an endless belt. The belt 17 is wound around the first pulley 15 and second pulley 16. The belt 17 connects the first pulley 15 and second pulley 16. The belt 17 transmits the rotational power of the first pulley 15 to the second pulley 16 and second output shaft 12.

The first pulley 15 can continuously change the effective diameter of the first pulley 15. The second pulley 16 can also continuously change the effective diameter of the second pulley 16. The speed change ratio of the speed changer 11 changes as the effective diameter of the first pulley 15 and the effective diameter of the second pulley 16 change. Here, the effective diameter of the first pulley 15 is the diameter in a portion of the first pulley 15 that contacts the belt 17. The effective diameter of the second pulley 16 is the diameter in a portion of the second pulley 16 that contacts the belt 17.

Fig. 2 shows the first pulley 15, second pulley 16, and belt 17 in solid lines when the effective diameter of the first pulley 15 is relatively small. Fig. 2 shows the first pulley 15, second pulley 16, and belt 17 in broken lines when the effective diameter of the first pulley 15 is relatively large. The effective diameter of the second pulley 16 becomes smaller as the effective diameter of the first pulley 15 becomes larger.

Specifically, the first pulley 15 has a first fixed sheave 15a and a first movable sheave 15b. The first fixed sheave 15a and first movable sheave 15b are arranged side by side along the axis A1. The belt 17 is located between the first fixed sheave 15a and first movable sheave 15b. The spacing along the axis A1 between the first fixed sheave 15a and first movable sheave 15b enlarges radially outward from the axis A1. The first fixed sheave 15a is not slidable along the axis A1. The first movable sheave 15b is slidable along the axis A1. The effective diameter of the first pulley 15 changes with movement of the first movable sheave 15b along the axis A1. The smaller the spacing between the first fixed sheave 15a and first movable sheave 15b becomes, the larger becomes the effective diameter of the first pulley 15.

The second pulley 16 has a second fixed sheave 16a and a second movable sheave 16b. The second fixed sheave 16a and second movable sheave 16b are arranged side by side along the axis A2. The belt 17 is located between the second fixed sheave 16a and second movable sheave 16b. The spacing along the axis A2 between the second fixed sheave 16a and second movable sheave 16b enlarges radially outward from the axis A2. The second fixed sheave 16a is not slidable along the axis A2. The second movable sheave 16b is slidable along the axis A2. The effective diameter of the second pulley 16 changes with movement of the second movable sheave 16b along the axis A2. The smaller the spacing between the second fixed sheave 16a and second movable sheave 16b becomes, the larger becomes the effective diameter of the second pulley 16.

Here, radial directions of the axis A2 are perpendicular to the axis A2. The phrase "radially outward of the axis" signifies directions perpendicular to the axis A2 and pointing away from the axis A2. The phrase "radially outward from the axis A2" also signifies directions perpendicular to the axis A2 and pointing away from the axis A2. The phrase "radially inward of the axis A2" signifies directions perpendicular to the axis A2 and approaching the axis A2. The phrase "radially inward toward the axis A2" also signifies directions perpendicular to the axis A2 and approaching the axis A2.

The centrifugal clutch 21 has one or more (e.g. three) centrifugal shoes 22. The centrifugal shoes 22 are connected to the second output shaft 12. The centrifugal shoes 22 are revolvable with the second output shaft 12. The centrifugal shoes 22 revolve about the axis A2. The centrifugal shoes 22 receive the rotational power of the second output shaft 12.

The centrifugal shoes 22 are movable by centrifugal force radially of the axis A2. When the centrifugal shoes 22 revolve about the axis A2, centrifugal force acts on the centrifugal shoes 22. The centrifugal force acting on the centrifugal shoes 22 becomes larger with increase in the revolving speed of the centrifugal shoes 22 about the axis A2. As the centrifugal force becomes larger, the centrifugal shoes 22 move radially outward from the axis A2. As the centrifugal force becomes smaller, the centrifugal shoes 22 move radially inward toward the axis A2. When the centrifugal shoes 22 do not revolve about the axis A2, centrifugal force does not act on the centrifugal shoes 22.

The axis A2 is an example of the first axis in this invention.

The centrifugal clutch 21 includes a clutch housing 31. The clutch housing 31 has a first cylindrical portion 32. The first cylindrical portion 32 is located radially outward of the axis A2 relative to the centrifugal shoes 22. The first cylindrical portion 32 can contact the centrifugal shoes 22, and can separate from the centrifugal shoes 22.

The first cylindrical portion 32 overlaps the centrifugal shoes 22 when seen radially of the axis A2. The first cylindrical portion 32 circumferentially surrounds the centrifugal shoes 22.

When the centrifugal shoes 22 move radially outward of the axis A2, the centrifugal shoes 22 contact the first cylindrical portion 32. When the centrifugal shoes 22 move radially outward from the axis A2, the centrifugal shoes 22 press on the first cylindrical portion 32 radially outward of the axis A2. The rotational power of the centrifugal shoes 22 is transmitted to the clutch housing 31 by a frictional force occurring between the centrifugal shoes 22 and first cylindrical portion 32. The rotational power of the centrifugal shoes 22 transmitted to the clutch housing 31 rotates the clutch housing 31 about the axis A2. When the first cylindrical portion 32 contacts the centrifugal shoes 22 with sufficient frictional force, the clutch housing 31 rotates integrally with the centrifugal shoes 22. The state where the first cylindrical portion 32 contacts the centrifugal shoes 22 with sufficient frictional force corresponds to the engaged state of the centrifugal clutch 21. When the centrifugal shoes 22 move radially inward of the axis A2, the centrifugal shoes 22 separate from the first cylindrical portion 32. When the first cylindrical portion 32 is separated from the centrifugal shoes 22, the rotational power of the centrifugal shoes 22 is not transmitted to the clutch housing 31. The state where the first cylindrical portion 32 is separated from the centrifugal shoes 22 corresponds to the disengaged state of the centrifugal clutch 21.

The clutch housing 31 has a bottom portion 41. The bottom portion 41 extends from the first cylindrical portion 32 radially inward toward the axis A2.

The bottom portion 41 and centrifugal shoes 22 are arranged along the axis A2. The bottom portion 41 overlaps the centrifugal shoes 22 when seen from the axis A2. The bottom portion 41 is located leftward of the centrifugal shoes 22, for example. Note that the bottom portion 41 does not contact the centrifugal shoes 22.

The clutch housing 31 has a boss portion 45. The boss portion 45 is fixed to the bottom portion 41.

The rear axle 10 is connected to the clutch housing 31. The rear axle 10 is coupled to the boss portion 45. The rear axle 10 is fixed to the boss portion 45. The rear axle 10 is rotatable with the clutch housing 31. The rear axle 10 rotates about the axis A2.

The rear axle 10 has an axis A3. The axis A3 is an imaginary straight line passing through the center of the rear axle 10. The axis A3 is parallel to the transverse direction Y, for example. The axis A3 is coaxial with the axis A2, for example. The rear axle 10 extends through the hollow portion 13 of the second output shaft 12. The rear axle 10 is rotatable relative to the second output shaft 12.

### 2. Constructions of centrifugal shoes 22 and clutch housing 31

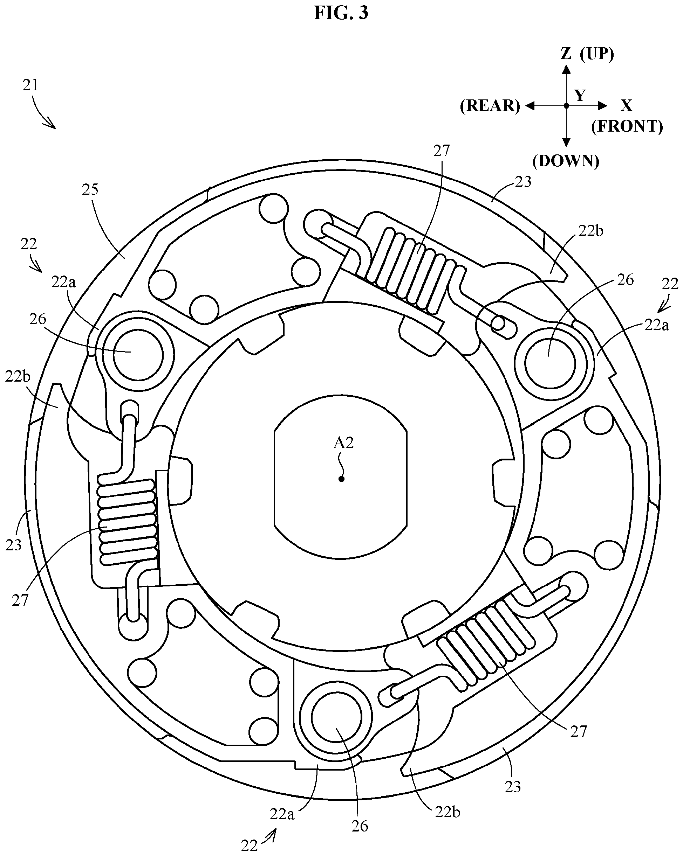

Fig. 3 is a view of the centrifugal shoes 22 seen from the axis A2. The centrifugal shoes 22 are arranged radially outward of the axis A2 relative to the second output shaft 12. The three centrifugal shoes 22 are arranged circumferentially of the axis A2. Each centrifugal shoe 22 extends circumferentially of the axis A2.

Reference is made to Figs. 2 and 3. An example of support structure for the centrifugal shoes 22 will be described. The centrifugal clutch 21 has a plate 25. The plate 25 is mounted on the second output shaft 12. The plate 25 extends from the second output shaft 12 radially outward of the axis A2. The centrifugal clutch 21 has one or more (e.g. three) support pins 26. The support pins 26 are fixed to the plate 25. The support pins 26 extend from the plate 25 parallel to the axis A2. The plate 25 and support pins 26 are rotatable with the second output shaft 12. The plate 25 and support pins 26 rotate about the axis A2.

The support pins 26 support the centrifugal shoes 22. The centrifugal shoes 22 are rotatable about the support pins 26. As the centrifugal shoes 22 rotate about the support pins 26, the centrifugal shoes 22 pivot radially of the axis A2. Specifically, each centrifugal shoe 22 has a proximal end portion 22a and a distal end portion 22b. The proximal end portion 22a is supported by the support pin 26. The distal end portion 22b extends from the proximal end portion 22a circumferentially of the axis A2. As the centrifugal shoe 22 rotates about the support pin 26, the distal end portion 22b pivots radially of the axis A2.

The centrifugal clutch 21 has one or more (e.g. three) springs 27. The springs 27 are connected to centrifugal shoes 22. For example, each spring 27 connects two centrifugal shoes 22 adjoining each other circumferentially of the axis A2. The springs 27 pull the centrifugal shoes 22 radially inward toward the axis A2. For example, each spring 27 pulls the distal end portion 22b so that the distal end portion 22b extend from the proximal end portion 22a circumferentially of the axis A2.

The centrifugal shoes 22, in response to the centrifugal force acting thereon, rotate about the support pins 26. With an increase of the centrifugal force, the centrifugal shoes 22 move radially outward of the axis A2 against the elastic force of the springs 27. With a decrease of the centrifugal force, the centrifugal shoes 22 move radially inward of the axis A2 by the elastic force of the springs 27.

The centrifugal shoes 22 have friction members 23. The friction members 23 are arranged on peripheral portions of the centrifugal shoes 22. The friction members 23 are formed of resin. The friction members 23 can contact the first cylindrical portion 32.

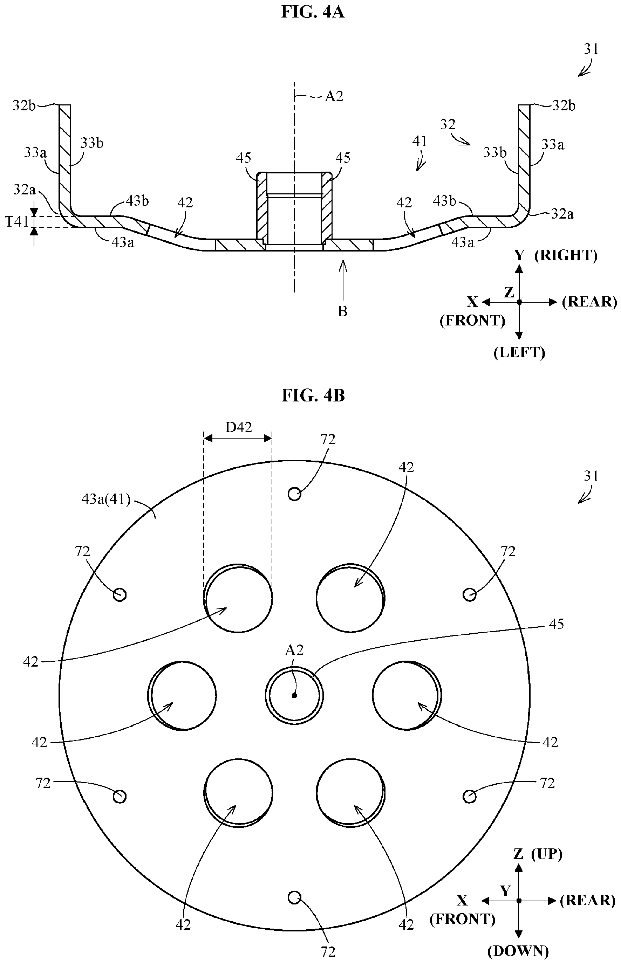

Fig. 4A is a horizontal sectional view of the clutch housing 31. Fig. 4B is a view of the clutch housing 31 seen from direction B shown in Fig. 4A. The first cylindrical portion 32 has an outer circumferential surface 33a and an inner circumferential surface 33b. The inner circumferential surface 33b can contact the centrifugal shoes 22. The inner circumferential surface 33b can contact the friction members 23 of the centrifugal shoes 22.

The first cylindrical portion 32 has a cylindrical shape centering on the axis A2. The first cylindrical portion 32 extends along the axis A2. The first cylindrical portion 32 extends in the transverse direction Y, for example. The first cylindrical portion 32 has a first end 32a and a second end 32b. The first end 32a of the first cylindrical portion 32 is a left end of the first cylindrical portion 32, for example. The second end 32b of the first cylindrical portion 32 is a right end of the first cylindrical portion 32, for example.

The bottom portion 41 extends from the first end 32a of the first cylindrical portion 32. The bottom portion 41 has a plate shape which is substantially perpendicular to the axis A2. The bottom portion 41 has a thickness T41. Here, the thickness T41 of the bottom portion 41 is a length of the bottom portion 41 along the axis A2.

The bottom portion 41 has a first surface 43a and a second surface 43b. Here, the first surface 43a of the bottom portion 41 is a surface turned up from the outer circumferential surface 33a of the first cylindrical portion 32. The second surface 43b of the bottom portion 41 is a surface turned up from the inner circumferential surface 33b of the first cylindrical portion 32. The first surface 43a of the bottom portion 41 is a left surface of the bottom portion 41, for example. The second surface 43b of the bottom portion 41 is a right surface of the bottom portion 41, for example.

The first end 32a of the first cylindrical portion 32 is covered by the bottom portion 41. The second end 32b of the first cylindrical portion 32 is open. Consequently, the clutch housing 31 is substantially bowl-shaped.

The bottom portion 41 has a plurality of (e.g. six) first openings 42. The first openings 42 are arranged circumferentially of the axis A2. The first openings 42 are formed around the boss portion 45. The first openings 42 have an inside diameter D42. Since the bottom portion 41 has the first openings 42, the clutch housing 31 is relatively lightweight. Further, with gas passing through the first openings 42, the centrifugal clutch 21 can be cooled effectively.

### 3. Constructions of clutch housing 31 and vibration proofing cover 51

Reference is made to Fig. 2. The centrifugal clutch 21 has a vibration proofing cover 51. The vibration proofing cover 51 suppresses vibration of the clutch housing 31. The vibration proofing cover 51 suppresses resonance of the clutch housing 31. By suppressing vibration and/or resonance of the clutch housing 31, the clutch housing 31 can be restrained from generating abnormal noise.

The vibration or resonance of the clutch housing 31 is caused by contact between the centrifugal shoes 22 and first cylindrical portion 32. In particular, the vibration or resonance of the clutch housing 31 is easily caused by stick slip. The stick slip is an alternation of slipping of the centrifugal shoes 22 relative to the first cylindrical portion 32 and sticking of the centrifugal shoes 22 and first cylindrical portion 32 to each other. When, for example, the centrifugal shoes 22 and first cylindrical portion 32 are in contact by insufficient frictional force, the stick slip will occur easily. For example, the stick slip will occur easily during the process of the centrifugal clutch 21 switching from the disengaged state to the engaged state. For example, the stick slip will occur easily during the process of the centrifugal clutch 21 switching from the engaged state to the disengaged state.

The vibration proofing cover 51 is attached to the clutch housing 31. The vibration proofing cover 51 is rotatable with the clutch housing 31. The vibration proofing cover 51 rotates about the axis A2.

The vibration proofing cover 51 has a second cylindrical portion 52. The second cylindrical portion 52 is located radially outward of the axis A2 of the second output shaft 12 relative to the first cylindrical portion 32.

When seen radially of the axis A2, the second cylindrical portion 52 overlaps the first cylindrical portion 32. When seen radially of the axis A2, the second cylindrical portion 52 overlaps the centrifugal shoes 22. The second cylindrical portion 52 contacts the first cylindrical portion 32.

The vibration proofing cover 51 has a fixed portion 61. The fixed portion 61 extends from the second cylindrical portion 52 radially inward toward the axis A2.

The fixed portion 61 and bottom portion 41 are arranged along the axis A2 of the second output shaft 12. The fixed portion 61 is located leftward of the bottom portion 41, for example. The fixed portion 61, bottom portion 41, and centrifugal shoes 22 are arranged in this order along the axis A2 of the second output shaft 12. The fixed portion 61 is in contact with the bottom portion 41.

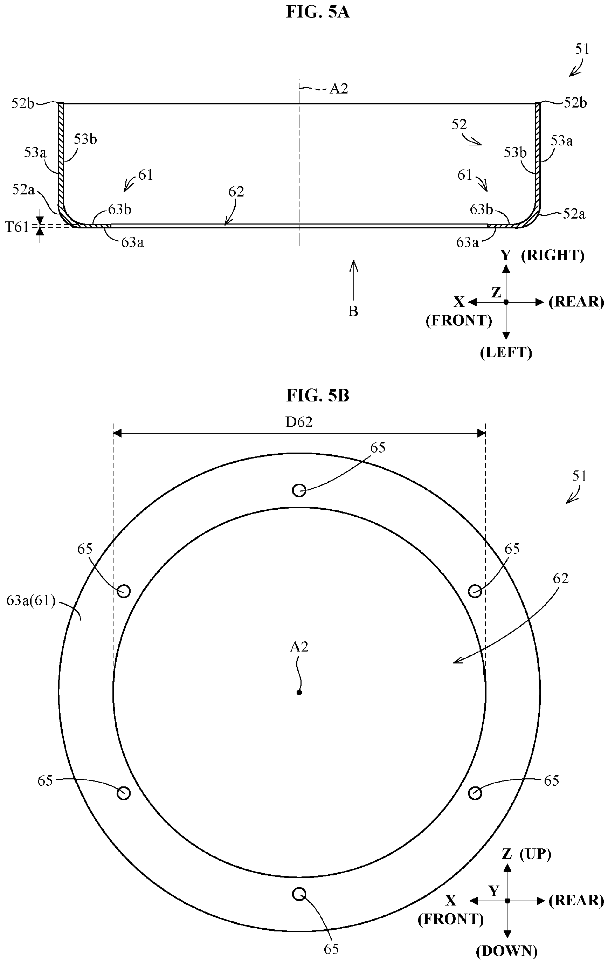

Fig. 5A is a horizontal sectional view of the vibration proofing cover 51. Fig. 5B is a view of the vibration proofing cover 51 seen from direction B shown in Fig. 5A. The second cylindrical portion 52 has a cylindrical shape centering on the axis A2. The second cylindrical portion 52 extends along the axis A2. The second cylindrical portion 52 extends in the transverse direction Y, for example. The second cylindrical portion 52 has a first end 52a and a second end 52b. The first end 52a of the second cylindrical portion 52 is a left end of the second cylindrical portion 52, for example. The second end 52b of the second cylindrical portion 52 is a right end of the second cylindrical portion 52, for example.

The second cylindrical portion 52 has an outer circumferential surface 53a and an inner circumferential surface 53b. The inner circumferential surface 53b of the second cylindrical portion 52 contacts the outer circumferential surface 33a of the first cylindrical portion 32.

The fixed portion 61 extends from the first end 52a of the second cylindrical portion 52. The fixed portion 61 has a plate shape which is substantially perpendicular to the axis A2. The fixed portion 61 has a thickness T61. Here, the thickness T61 of the fixed portion 61 is a length of the fixed portion 61 along the direction of the axis A2. The thickness T61 of the fixed portion 61 is smaller than the thickness T41 of the bottom portion 41. In other words, the thickness T41 of the bottom portion 41 is larger than the thickness T61 of the fixed portion 61.

The fixed portion 61 has a first surface 63a and a second surface 63b. Here, the first surface 63a of the fixed portion 61 is a surface turned up from the outer circumferential surface 53a of the second cylindrical portion 52. The second surface 63b of the fixed portion 61 is a surface turned up from the inner circumferential surface 53b of the second cylindrical portion 52. The first surface 63a of the fixed portion 61 is a left surface of the fixed portion 61, for example. The second surface 63b of the fixed portion 61 is a right surface of the fixed portion 61, for example. The second surface 63b of the fixed portion 61 contacts the first surface 43a of the bottom portion 41.

When seen from the axis A2, the fixed portion 61 has an annular shape. The fixed portion 61 is what is called an inward flange.

The fixed portion 61 has a second opening 62. The second opening 62 has a circular shape centering on the axis A2. The second opening 62 has an inside diameter D62. The inside diameter D62 of the second opening 62 is relatively large. The inside diameter D62 of the second opening 62 is larger than the inside diameter D42 of the first openings 42.

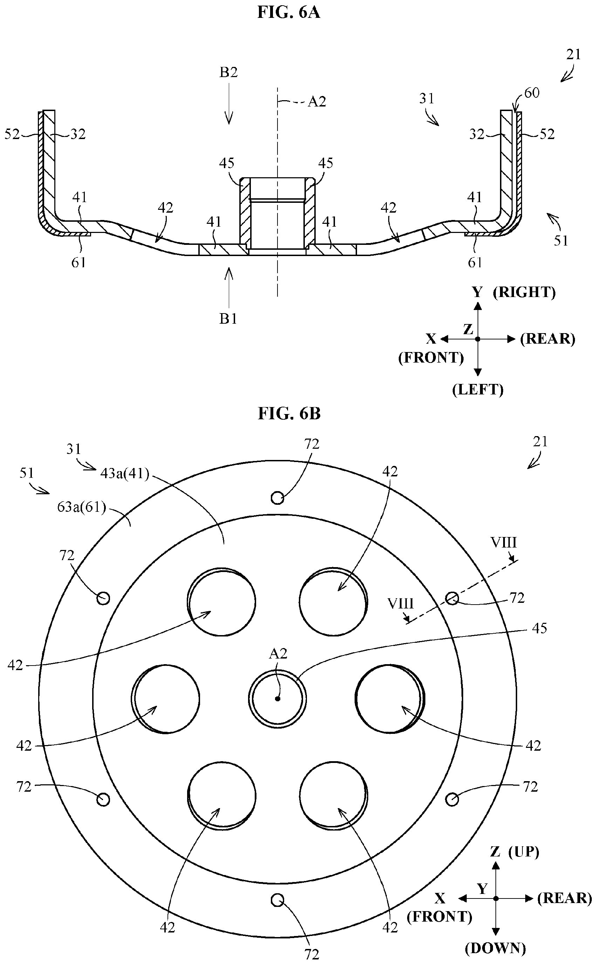

Fig. 6A is a horizontal sectional view of the clutch housing 31 and vibration proofing cover 51. Fig. 6B is a view of the clutch housing 31 and vibration proofing cover 51 seen from direction B1 shown in Fig. 6A. The length along the axis A2 of the second cylindrical portion 52 is substantially the same as the length along the axis A2 of the first cylindrical portion 32.

The second cylindrical portion 52 contacts part of the first cylindrical portion 32. The second cylindrical portion 52 contacts part of the outer circumferential surface 33a of the first cylindrical portion 32.

The second cylindrical portion 52 contacts only part of the first cylindrical portion 32. One or more (e.g. six) gaps 60 are formed between the first cylindrical portion 32 and second cylindrical portion 52.

Further, the second cylindrical portion 52 presses on part of the first cylindrical portion 32. The second cylindrical portion 52 presses only part of the first cylindrical portion 32.

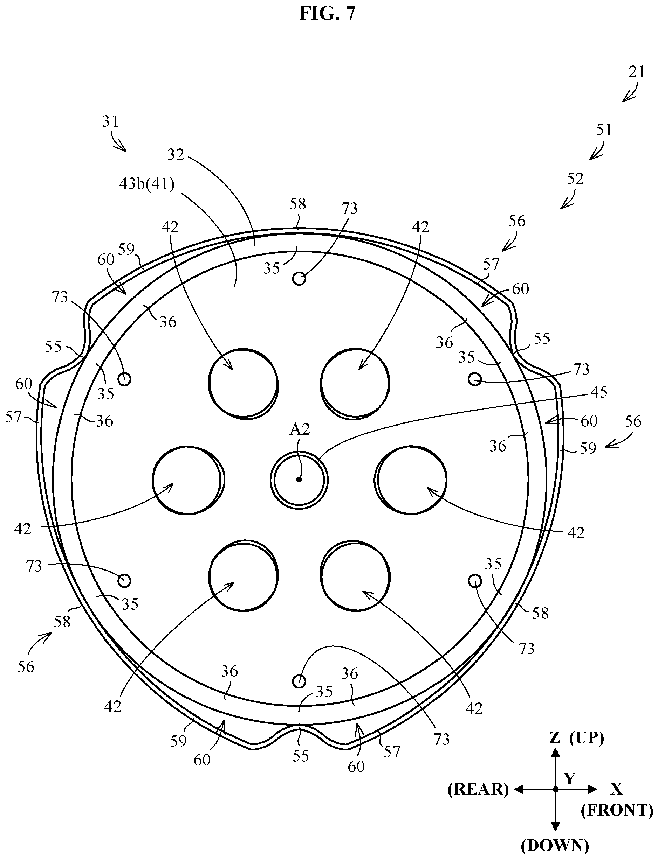

Fig. 7 is a view of the clutch housing 31 and vibration proofing cover 51 seen from direction B2 shown in Fig. 6A. Fig. 7 emphatically shows the shape of the second cylindrical portion 52 for expediency. Consequently, the second cylindrical portion 52 shown in Fig. 7 is different from the shape of the second cylindrical portion 52 shown in Figs. 5B and 6B. The second cylindrical portion 52 includes one or more (e.g. three) first contact portions 55 and one or more (e.g. three) arc portions 56. The first contact portions 55 and arc portions 56 alternately continue circumferentially of the second cylindrical portion 52. The first contact portions 55 project inward of the second cylindrical portion 52. The first contact portions 55 are curved to project radially inward toward the axis A2. The arc portions 56 swell outward of the second cylindrical portion 52. The arc portions 56 are curved to project radially outward from the axis A2.

Each first contact portion 55 is formed to have an appropriate length from the second end 52b of the second cylindrical portion 52. The length along the axis A2 of the first contact portions 55 is shorter than the length along the axis A2 of the second cylindrical portion 52, for example. Or the length along the axis A2 of the first contact portions 55 may be substantially the same as the length along the axis A2 of the second cylindrical portion 52. Each arc portion 56 extends from the first end 52a of the second cylindrical portion 52 to the second end 52b of the second cylindrical portion 52. The length along the axis A2 of the arc portions 56 is substantially the same as the length along the axis A2 of the second cylindrical portion 52, for example.

Each arc portion 56 has a first non-contact portion 57, a second contact portion 58, and a second non-contact portion 59. The first non-contact portion 57, second contact portion 58, and second non-contact portion 59 are arranged in this order circumferentially of the second cylindrical portion 52. The first non-contact portion 57, second contact portion 58, and second non-contact portion 59 are arranged in this order between two of the first contact portions 55.

The first contact portion 55 and second contact portion 58 contact the first cylindrical portion 32, respectively. The first contact portion 55 and second contact portion 58 press on the outer circumferential surface 33a of the first cylindrical portion 32 radially inward toward the axis A2, respectively. The first non-contact portion 57 and second non-contact portion 59 do not contact the first cylindrical portion 32, respectively. The first non-contact portion 57 and second non-contact portion 59 are separated from the first cylindrical portion 32, respectively. Gaps 60 are formed between the first non-contact portion 57 and first cylindrical portion 32 and between the second non-contact portion 59 and first cylindrical portion 32.

Consequently, the first cylindrical portion 32 is formed of one or more (e.g. six) contact portions 35 and one or more (e.g. six) non-contact portions 36. The contact portions 35 are parts of the first cylindrical portion 32 in contact with the second cylindrical portion 52. The non-contact portions 36 are parts of the first cylindrical portion 32 not contacting the second cylindrical portion 52. The contact portions 35 and non-contact portions 36 alternately continue circumferentially of the first cylindrical portion 32.

Reference is made to Figs. 6A and 6B. The fixed portion 61 and bottom portion 41 are laminated. The second surface 63b of the fixed portion 61 is in contact with the first surface 43a of the bottom portion 41.

When seen from the axis A2, the fixed portion 61 overlaps the bottom portion 41. When seen from the axis A2, the fixed portion 61 overlaps an edge region of the bottom portion 41. When seen from the axis A2, the fixed portion 61 does not overlap the first openings 42.

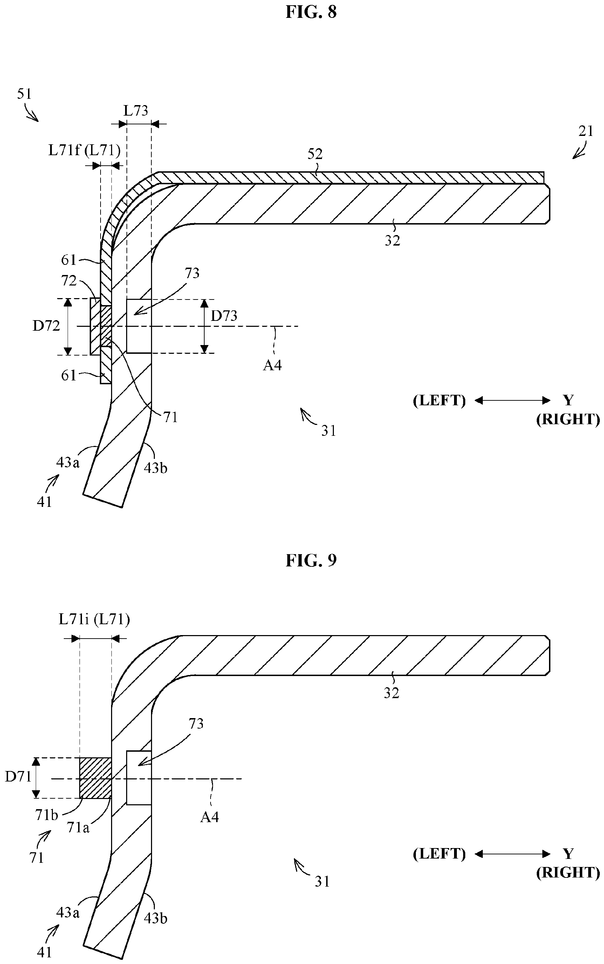

Fig. 8 is a sectional view taken on line VIII-VIII of Fig. 6B. The fixed portion 61 is joined to the bottom portion 41. The fixed portion 61 is crimped to the bottom portion 41. In other words, the fixed portion 61 is attached by pressure to the bottom portion 41. The fixed portion 61 sticks tight to the bottom portion 41. The fixed portion 61 is fastened to the bottom portion 41 using a pressing machine or the like. The fixed portion 61 is mechanically joined to the bottom portion 41. The fixed portion 61 is not joined by fusion to the bottom portion 41. The fixed portion 61 is joined to the bottom portion 41 by non-welding means.

The fixed portion 61 is immovable relative to the bottom portion 41. The fixed portion 61 is not rotatable relative to the bottom portion 41. Consequently, the vibration proofing cover 51 is immovable relative to the clutch housing 31. The vibration proofing cover 51 is not rotatable relative to the clutch housing 31.

A construction for fixing the fixed portion 61 to the bottom portion 41 will be described. The centrifugal clutch 21 has one or more (e.g. six) projections 71. The projections 71 penetrate the fixed portion 61. The centrifugal clutch 21 has heads 72. The heads 72 are connected to the projections 71. The heads 72 press the fixed portion 61 on the bottom portion 41.

The projections 71 extend in directions parallel to the axis A2 of the second output shaft 12. The bottom portion 41, fixed portion 61, and heads 72 are arranged in this order along the axis A2 of the second output shaft 12. The heads 72 are located leftward of the fixed portion 61, for example. The fixed portion 61 contacts the bottom portion 41 and heads 72. At least parts of the heads 72 overlap both the fixed portion 61 and bottom portion 41 when seen from the axis A2.

Specifically, each projection 71 has an axis A4. The axis A4 is an imaginary straight line passing through the center of the projection 71. The axis A4 is parallel to the axis A2 shown in Fig. 6A and other figures, for example. The axis A4 is parallel to the transverse direction Y, for example. The projections 71 prevent the fixed portion 61 from moving relative to the bottom portion 41. The projections 71 prevent the fixed portion 61 from moving radially of the axes A4 relative to the bottom portion 41. Consequently, the projections 71 prevent the fixed portion 61 from rotating about the axis A2 relative to the bottom portion 41. The projections 71 prevent the fixed portion 61 from moving radially of the axis A2 relative to the bottom portion 41. The projections 71 prevent the fixed portion 61 from rotating radially of the axis A2 relative to the bottom portion 41.

The bottom portion 41, fixed portion 61, and heads 72 are stacked in this order. Each head 72 extends radially outward of the axis A4 from the projection 71. The whole of each head 72 overlaps the bottom portion 41 when seen from the axis A2. At least part of each head 72 overlaps the fixed portion 61 when seen from the axis A2. The first surface 63a of the fixed portion 61 contacts the heads 72. The second surface 63b of the fixed portion 61 contacts the bottom portion 41. The bottom portion 41 and heads 72 stick tight to the fixed portion 61, respectively. The bottom portion 41 and heads 72 clamp the fixed portion 61. The heads 72 prevent the fixed portion 61 from moving relative to the bottom portion 41. The heads 72 prevent the fixed portion 61 from moving axially of the axis A2 relative to the bottom portion 41.

The projections 71 are connected to the bottom portion 41. The projections 71 are connected to the first surface 43a of the bottom portion 41. The projections 71 project from the first surface 43a of the bottom portion 41. The projections 71 extend leftward from the bottom portion 41, for example.

The projections 71 are integrated with the bottom portion 41. The heads 72 are integrated with the projections 71. That is, the projections 71 and heads 72 are integrated with the bottom portion 41.

Fig. 9 is a sectional view showing forming of the clutch housing 31. The projections 71 are formed by plastic deformation of the bottom portion 41. The projections 71 are formed by plastic processing. The plastic processing is press processing, for example.

The bottom portion 41 further includes one or more (e.g. six) recesses 73. The recesses 73 are arranged on back sides of the projections 71. The recesses 73 are formed in the second surface 43b of the bottom portion 41. The recesses 73 are arranged on the axes A4.

The recesses 73 are formed by plastic deformation of the bottom portion 41. The recesses 73 are formed by plastic processing (e.g. press processing).

The plastic processing (press processing) for forming the projections 71 and recesses 73 is half pierce, for example. Half pierce is also called half blanking, half shear, or half punch. In half pierce, the projections 71 are formed by ejection from the bottom portion 41 simultaneously with formation of the recesses 73. Specifically, the projections 71 are raised from the first surface 43a of the bottom portion 41 at the same time as the recesses 73 are formed in the second surface 43b of the bottom portion 41. Here, the recesses 73 and projections 71 are both formed by plastic deformation of the bottom portion 41.

Each projection 71 has a proximal end 71a and a distal end 71b. The proximal end 71a of the projection 71 is connected to the bottom portion 41. The proximal end 71a of the projection 71 is integrated with the bottom portion 41.

Reference is made to Figs. 8 and 9. The heads 72 are formed by plastic deformation of the projections 71. The heads 72 are formed by plastic deformation of the distal ends 71b of the projections 71. The heads 72 are formed by plastic processing (press processing).

The plastic processing (press processing) for forming the heads 72 is heading, for example. In heading, the distal ends 71b of the projections 71 are buckled. In heading, a load is applied to the distal ends 71b of the projections 71. In heading, an external force is applied to the distal ends 71b of the projections 71. In heading, the distal ends 71b of the projections 71 are pushed along the axes A4. In heading, the distal ends 71b of the projections 71 are pushed toward the bottom portion 41. By applying the load to the distal ends 71b of the projections 71, the distal ends 71b spread radially of the axes A4. The heads 72 are formed by crushing the distal ends 71b of the projections 71. By the plastic processing (press processing), the heads 72 of the distal ends 71b are plastically deformed to the projections 71.

Alternatively, the plastic processing for forming the heads 72 may be spinning, for example.

The projections 71 have a length L71 and an outside diameter D71. The outside diameter D71 is shown in Fig. 9. The length L71 is a length of the projections 71 along the axes A4. With forming of the heads 72, the projections 71 are contracted along the axes A4. The length L71 of the projections 71 after the heads 72 are formed is smaller than the length L71 of the projections 71 before the heads 72 are formed. In the following description, the length L71 of the projections 71 before the heads 72 are formed will particularly be called the "initial length L71i of the projections 71". The length L71 of the projections 71 after the heads 72 are formed will particularly be called the "final length L71f of the projections 71". The initial length L71i of the projections 71 is longer than the final length L71f of the projections 71.

The initial length L71i of the projections 71 is thicker (longer) than the thickness T61 of the fixed portion 61. The initial length L71i of the projections 71 is thinner (shorter) than the thickness T41 of the bottom portion 41. The initial length L71i of the projections 71 is thicker (longer) than 50% of the thickness T41 of the bottom portion 41, for example. The initial length L71i of the projections 71 is thinner (shorter) than the outside diameter D71 of the projections 71.

The final length L71f of the projections 71 is substantially the same as the thickness T61 of the fixed portion 61.

The heads 72 have an outside diameter D72. The outside diameter D72 is shown in Fig. 8. The outside diameter D72 of the heads 72 is larger than the outside diameter D71 of the projections 71.

The recesses 73 have an inside diameter D73 and a depth L73. Here, the depth L73 of the recesses 73 is a length of the recesses 73 along the axes A4.

The inside diameter D73 of the recesses 73 is larger than the outside diameter D71 of the projections 71. In other words, the outside diameter D71 of the projections 71 is smaller than the inside diameter D73 of the recesses 73. The inside diameter D73 of the recesses 73 is larger than the depth L73 of the recesses 73.

The depth L73 of the recesses 73 is smaller (shorter) than the thickness T41 of the bottom portion 41. The depth L73 of the recesses 73 is thicker (longer) than 50% of the thickness T41 of the bottom portion 41, for example. The depth L73 of the recesses 73 is smaller (shorter) than the initial length L71i of the projections 71.

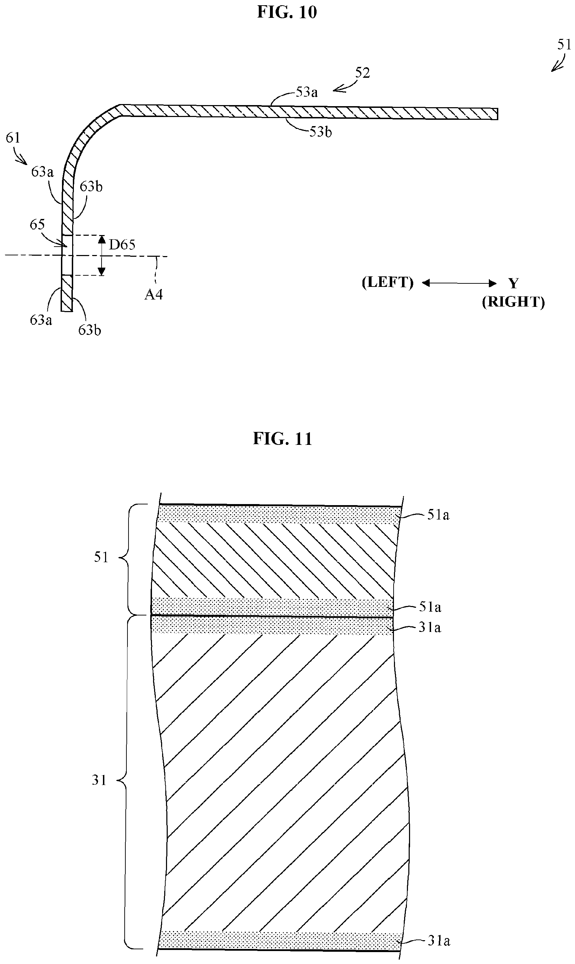

Fig. 10 is a sectional view of part of the vibration proofing cover 51. The fixed portion 61 has one or more (e.g. six) bores 65. The bores 65 are for receiving the projections 71. The bores 65 are arranged on the axes A4.

The bores 65 are formed by plastic deformation of the fixed portion 61. The bores 65 are formed by shear processing (press processing). The shear processing (press processing) for forming the bores 65 is punching (piercing), for example.

The bores 65 have an inside diameter D65. The inside diameter D65 of the bores 65 is slightly larger than the outside diameter D71 of the projections 71. The inside diameter D65 of the bores 65 is smaller than the outside diameter D72 of the heads 72. In other words, the outside diameter D72 of the heads 72 is larger than the inside diameter D65 of the bores 65.

The projections 71 are arranged in the bores 65. The projections 71 are placed in the bores 65 after the projections 71 are formed and before the heads 72 are formed. The heads 72 are formed after the projections 71 are placed in the bores 65. Consequently, the heads 72 are not formed simultaneously with the forming of the projections 71. The heads 72 are formed after the projections 71 are formed.

Reference is made to Figs. 4B and 6B. The heads 72 are arranged circumferentially of the axis A2. The heads 72 are arranged in edge regions of the bottom portion 41. The heads 72 are arranged around the first openings 42. The heads 72 are arranged radially more outward of the axis A2 than the first openings 42. When seen from the axis A2, the heads 72 are circular, for example. The outside diameter D72 of the heads 72 is sufficiently smaller than the inside diameter D42 of the first openings 42.

Reference is made to Fig. 7. The recesses 73 are arranged circumferentially of the axis A2. The recesses 73 are arranged in edge regions of the bottom portion 41. When seen from the axis A2, the recesses 73 are arranged in substantially the same positions as the heads 72. The recesses 73 are arranged around the first openings 42. The recesses 73 are arranged radially more outward of the axis A2 than the first openings 42. When seen from the axis A2, the recesses 73 are circular, for example. The inside diameter D73 of the recesses 73 is sufficiently smaller than the inside diameter D42 of the first openings 42.

Although not shown, when seen from the axis A2, the projections 71 are arranged in substantially the same positions as the heads 72. When seen from the axis A2, the projections 71 are arranged in substantially the same positions as the recesses 73. When seen from the axis A2, the projections 71 are circular, for example. The outside diameter D71 of the projections 71 is sufficiently smaller than the inside diameter D42 of the first openings 42.

Reference is made to Fig. 5B. The bores 65 are arranged circumferentially of the axis A2. When seen from the axis A2, the bores 65 are arranged in substantially the same positions as the projections 71. When seen from the axis A2, the bores 65 are circular, for example. The inside diameter D65 of the bores 65 is sufficiently smaller than the inside diameter D62 of the second opening 62.

The projections 71 are an example of the pins in this invention.

The materials of the clutch housing 31 and vibration proofing cover 51 will be described.

The clutch housing 31 is metal, for example. The clutch housing 31 is formed of steel plate, for example. The material for the clutch housing 31 is iron, for example.

The vibration proofing cover 51 is metal, for example. The vibration proofing cover 51 is formed of steel plate, for example. The material for the vibration proofing cover 51 is iron, for example.

The clutch housing 31 is surface-treated, for example. The surface of the clutch housing 31 is reformed by the surface treatment.

The vibration proofing cover 51 is surface-treated, for example. The surface of the vibration proofing cover 51 is reformed by the surface treatment.

The surface treatment is nitriding treatment, for example. The surface treatment includes heat treatment, for example. In the nitriding treatment, the clutch housing 31 or vibration proofing cover 51 is heat-treated in a nitriding atmosphere. The nitriding atmosphere includes at least one of nitrogen gas and ammonia gas, for example. The heat treatment heats the clutch housing 31 or vibration proofing cover 51. The heat treatment heats the clutch housing 31 or vibration proofing cover 51 to a range of 400 degrees to 700 degrees, for example.

Fig. 11 is a sectional view schematically showing the clutch housing 31 and vibration proofing cover 51. Specifically, Fig. 11 shows the clutch housing 31 and vibration proofing cover 51 with the surface treatment carried out. As a result of the nitriding treatment, the clutch housing 31 has compound layers 31a. After the nitriding treatment, the vibration proofing cover 51 has compound layers 51a. The compound layers 31a and 51a include a nitriding compound, respectively. The nitriding compound is a compound of nitrogen and metal.

The compound layers 31a are formed on the surfaces of the clutch housing 31. The compound layers 51a are formed on the surfaces of the vibration proofing cover 51. The compound layers 31a and 51a have a thickness of 5µm or more, respectively. The compound layers 31a and 51a have a thickness of approximately 20µm or less, respectively, for example. Here, the surfaces of the clutch housing 31 include the inner circumferential surface 33b of the first cylindrical portion 32, the outer circumferential surface 33a of the first cylindrical portion 32, the first surface 43a of the bottom portion 41, and the second surface 43b of the bottom portion 41. The surfaces of the vibration proofing cover 51 include the inner circumferential surface 53b of the second cylindrical portion 52, the outer circumferential surface 53a of the second cylindrical portion 52, the first surface 63a of the fixed portion 61, and the second surface 63b of the fixed portion 61.

The compound layers 31a and 51a have a relatively large electric resistance, respectively. The clutch housing 31 after the surface treatment has a larger electric resistance than the clutch housing 31 before the surface treatment. The vibration proofing cover 51 after the surface treatment has a larger electric resistance than the vibration proofing cover 51 before the surface treatment.

The compound layers 31a and 51a have a relatively high hardness, respectively. The clutch housing 31 after the surface treatment has a higher hardness than the clutch housing 31 before the surface treatment. The vibration proofing cover 51 after the surface treatment has a higher hardness than the vibration proofing cover 51 before the surface treatment.

### 4. Procedure for processing and assembly of clutch housing 31 and vibration proofing cover 51

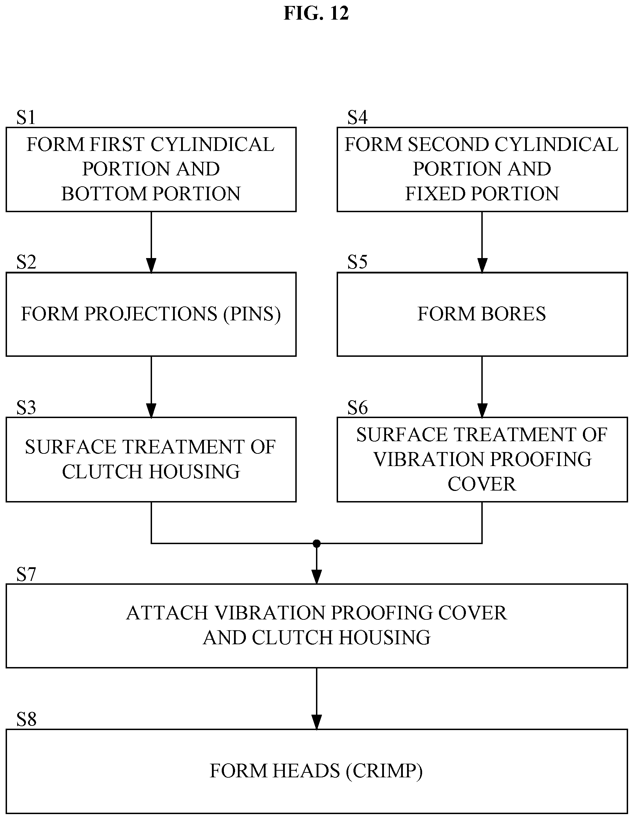

Fig. 12 is a flow chart showing a procedure for processing and assembly of the clutch housing 31 and vibration proofing cover 51.

### Step S1: Form first cylindrical portion 32 and bottom portion 41

The bottom portion 41 and first cylindrical portion 32 are formed. Specifically, the bottom portion 41 and first cylindrical portion 32 are formed by press processing. The plastic processing (press processing) is deep drawing, for example. The bottom portion 41 and first cylindrical portion 32 are formed by press processing of flat plate, for example. The bottom portion 41 and first cylindrical portion 32 constitute an integrated whole.

### Step S2: Form projections 71

The projections 71 are formed. Specifically, the projections 71 are formed by plastic processing (press processing). The press processing is half pierce, for example. Simultaneously with the forming of the projections 71, the recesses 73 are formed in the bottom portion 41.

Further, the first openings 42 are formed. Specifically, the first openings 42 are formed in the bottom portion 41 by shear processing (press processing). The press processing is punching, for example.

The heads 72 are not yet formed in step S2.

### Step S3: Surface treatment of the clutch housing 31

The clutch housing 31 is surface-treated. The clutch housing 31 is surface-treated in a state not having the vibration proofing cover 51 attached thereto.

### Step S4: Form second cylindrical portion 52 and fixed portion 61

The second cylindrical portion 52 and fixed portion 61 are formed. Specifically, the second cylindrical portion 52 and fixed portion 61 are formed by press processing. The press processing is deep drawing, for example. The second cylindrical portion 52 and fixed portion 61 are formed by press processing of flat plate, for example. The second cylindrical portion 52 and fixed portion 61 constitute an integrated whole.

### Step S5: Form bores 65

The bores 65 are formed. Specifically, the bores 65 are formed in the fixed portion 61 by press processing. The press processing is punching, for example. Further, the second opening 62 is formed. Specifically, the second opening 62 is formed in the fixed portion 61 by pierce processing.

Here, the bores 65 and second opening 62 are formed at the same time. The bores 65 and second opening 62 are formed by one plastic processing (press processing).

Step S6: Surface treatment of vibration proofing cover 51

The vibration proofing cover 51 is surface-treated. The vibration proofing cover 51 is surface-treated in a state where the clutch housing 31 is not attached to the vibration proofing cover 51.

### Step S7: Attach vibration proofing cover 51 and clutch housing 31

The vibration proofing cover 51 is attached to the clutch housing 31. Specifically, the vibration proofing cover 51 is pressed onto the clutch housing 31. The vibration proofing cover 51 is fitted outside the clutch housing 31. Consequently, the second cylindrical portion 52 contacts part of the first cylindrical portion 32. The second cylindrical portion 52 presses on part of the first cylindrical portion 32. The fixed portion 61 contacts the bottom portion 41. The projections 71 are placed in the bores 65. The projections 71 penetrate the fixed portion 61. The distal ends 71b of the projections 71 project from the fixed portion 61.

### Step S8: Form (crimp) heads 72

The heads 72 are formed. Specifically, the heads 72 are formed by plastic processing (press processing). The plastic processing is heading or spinning, for example. By forming of the heads 72, the fixed portion 61 is crimped to the bottom portion 41.

A temporal order of steps S1-S8 will now be described.

Preferably, step S2 is executed after step S1. However, there is no restriction on the temporal order between step S1 and step S2. For example, at least part of step S2 may be executed before at least part of step S1. For example, at least part of step S2 may be executed simultaneously with at least part of step S1. For example, at least part of step S2 may be executed after at least part of step S1.

Step S3 is executed after steps S1 and S2.

Preferably, step S5 is executed after step S4. However, there is no restriction on the temporal order between step S4 and step S5. For example, at least part of step S5 may be executed before at least part of step S4. For example, at least part of step S5 may be executed simultaneously with at least part of step S4. For example, at least part of step S5 may be executed after at least part of step S4.

Step S6 is executed after steps S4 and S5.

There is no restriction on the temporal order between steps S1-S3 and steps S4-S6. For example, at least part of steps S1-S3 may be executed before at least part of steps S4-S6. For example, at least part of steps S1-S3 may be executed simultaneously with at least part of steps S4-S6. For example, at least part of steps S1-S3 may be executed after at least part of steps S4-S6.

Step S7 is executed after steps S1-S6. Step S8 is executed after step S7.

### 5. Advantageous Effects

The centrifugal clutch 21 includes centrifugal shoes 22. The centrifugal shoes 22 revolve about the axis A2. The centrifugal shoes 22 are movable by centrifugal force radially outward of the axis A2. The centrifugal clutch 22 includes a clutch housing 31. The clutch housing 31 has a first cylindrical portion 32. The first cylindrical portion 32 is located radially outward of the axis A2 relative to the centrifugal shoes 22. The first cylindrical portion 32 can contact the centrifugal shoes 22. This can appropriately connect power transmission between the centrifugal shoes 22 and clutch housing 31. The first cylindrical portion 32 can separate from the centrifugal shoes 22. This can appropriately cut power transmission between the centrifugal shoes 22 and clutch housing 31.

The centrifugal clutch 21 includes a vibration proofing cover 51. The vibration proofing cover 51 has a second cylindrical portion 52. The second cylindrical portion 52 is located radially outward of the axis A2 relative to the first cylindrical portion 32. The second cylindrical portion 52 contacts part of the first cylindrical portion 32. The vibration proofing cover 51 can therefore appropriately suppress vibration of the first cylindrical portion 32.

The clutch housing 31 has a bottom portion 41. The bottom portion 41 extends from the first cylindrical portion 32 radially inward of the axis A2. The vibration proofing cover 51 has a fixed portion 61. The fixed portion 61 extends from the second cylindrical portion 52 radially inward of the axis A2. The fixed portion 61 is crimped to the bottom portion 41. The clutch housing 31 and vibration proofing cover 51 can therefore appropriately be fixed together. Specifically, the clutch housing 31 and vibration proofing cover 51 can appropriately be joined together, not by fusion welding (welding).

The fixed portion 61 is fixed to the bottom portion 41 by plastic processing. The clutch housing 31 and vibration proofing cover 51 can therefore appropriately be joined together.

The fixed portion 61 is fixed to the bottom portion 41 by press processing. The clutch housing 31 and vibration proofing cover 51 can therefore appropriately be joined together.

The centrifugal clutch 21 includes projections 71 and heads 72. The projections 71 penetrate the fixed portion 61. The heads 72 are connected to the projections 71. The heads 72 press the fixed portion 61 on the bottom portion 41. The fixed portion 61 and bottom portion 41 can therefore be appropriately fixed together.

The projections 71 extend parallel to the axis A2. The bottom portion 41, the fixed portion 61, and the heads 72 are arranged in the stated order axially of the axis A2. Thus, the projections 71 can appropriately penetrate the fixed portion 61. Further, the projections 71 can appropriately join the heads 72. The fixed portion 61 contacts the bottom portion 41. The fixed portion 61 contacts the heads 72. At least part of the heads 72 overlap both the fixed portion 61 and the bottom portion 41 as seen from the axis A2. The heads 72 can therefore appropriately press the fixed portion 61 on the bottom portion 41.

The projections 71 and the heads 72 are integrated with the bottom portion 41. This can simplify the construction of the centrifugal clutch 21.

The bottom portion 41 has a thickness T41 larger than a thickness T61 of the fixed portion 61. Thus, even though the projections 71 and heads 72 are integrated with the bottom portion 41, the projections 71 and heads 72 can be formed appropriately. Specifically, even though the projections 71 are integrated with the bottom portion 41, the projections 71 can have a length L71 enough to penetrate the fixed portion 61. Even though the heads 72 are integrated with the bottom portion 41, the heads 72 can be arranged in positions capable of appropriately pressing the fixed portion 61 on the bottom portion 41.

The bottom portion 41 has recesses 73 arranged on back sides of the projections 71. The projections 71 are formed to project from the bottom portion 41 simultaneously with formation of the recesses 73. Thus, the projections 71 can be formed conveniently.

The projections 71 have an outside diameter D71 smaller than an inside diameter D73 of the recesses 73. Therefore, the length L71 of the projections 71 can easily be secured. Specifically, an initial length L71i of the projections 71 can easily be made larger than the thickness T61 of the fixed portion 61. The projections 71 can therefore penetrate the fixed portion 61 conveniently. On the other hand, the inside diameter D73 of the recesses 73 is larger than the outside diameter D71 of the projections 71. Therefore, the depth L73 of the recesses 73 can easily be made small. This can prevent excessive lowering of the strength of the bottom portion 41.

The depth L73 of the recesses 73 is smaller than the thickness T41 of the bottom portion 41. This can conveniently secure the strength of the bottom portion 41.

The heads 72 are formed by applying a load to distal ends 71b of the projections 71. The heads 72 can therefore be conveniently formed.

The heads 72 are formed by crushing the distal ends 71b of the projections 71. The heads 72 can therefore be conveniently formed.

The heads 72 are formed after the vibration proofing cover 51 is attached to the clutch housing 31. The heads 72 can therefore conveniently press the fixed portion 61 on the bottom portion 41.

The clutch housing 31 is surface-treated. Thus, the functions of the clutch housing 31 can be improved conveniently. For example, the characteristics of friction between the clutch housing 31 and centrifugal shoes 22 can be improved. In other words, the affinity of friction between the clutch housing 31 and centrifugal shoes 22 can be improved. For example, the rust prevention of the clutch housing 31 can be improved.

In particular, the clutch housing 31 is given nitriding treatment. Thus, the characteristics of friction between the clutch housing 31 and centrifugal shoes 22 can be improved effectively. In other words, the affinity of friction between the clutch housing 31 and centrifugal shoes 22 can be improved effectively. The rust prevention of the clutch housing 31 can be improved effectively.

The vibration proofing cover 51 is surface-treated. Thus, the functions of the vibration proofing cover 51 can be improved conveniently. For example, the rust prevention of the vibration proofing cover 51 can be improved.

In particular, the vibration proofing cover 51 is given nitriding treatment. Thus, the rust prevention of the vibration proofing cover 51 can be improved effectively.

The clutch housing 31 is surface-treated in a state not attached to the vibration proofing cover 51 (step S3). The vibration proofing cover 51 is attached to the clutch housing 31 after the clutch housing 31 is surface-treated (step S7). Consequently, after the surface treatment of the clutch housing 31 and before the vibration proofing cover 51 is attached to the clutch housing 31, the dimensions of the clutch housing 31 can be controlled with high accuracy. The accuracy of the relative position between the clutch housing 31 and vibration proofing cover 51 can therefore be secured conveniently. In other words, when attaching the vibration proofing cover 51 to the clutch housing 31, the positional adjustment of the clutch housing 31 and vibration proofing cover 51 can be performed with high accuracy. In particular, the accuracy of the relative position between the first cylindrical portion 32 and second cylindrical portion 52 can be secured conveniently. In other words, when attaching the vibration proofing cover 51 to the clutch housing 31, the positional adjustment of the first cylindrical portion 32 and second cylindrical portion 52 can be performed with high accuracy. For example, when the vibration proofing cover 51 is attached to the clutch housing 31, the contact portions 35 of the first cylindrical portion 32 can be made to appropriately contact the second cylindrical portion 52. For example, when the vibration proofing cover 51 is attached to the clutch housing 31, the non-contact portions 36 of the first cylindrical portion 32 can be appropriately spaced from the second cylindrical portion 52. For example, when the vibration proofing cover 51 is attached to the clutch housing 31, the gaps 60 can be appropriately formed between the first cylindrical portion 32 and second cylindrical portion 52. As a result, vibration of the first cylindrical portion 32 can be suppressed conveniently.

Especially, the surface treatment includes heat treatment. In the surface treatment, therefore, there is a possibility that the clutch housing 31 may be distorted. It is difficult to correct the distortion of the clutch housing 31 in a state where the vibration proofing cover 51 is attached to the clutch housing 31. Consequently, if the surface treatment of the clutch housing 31 were carried out in the state where the vibration proofing cover 51 is attached to the clutch housing 31, it would be difficult to secure the accuracy of the relative position between the clutch housing 31 and vibration proofing cover 51. And if the accuracy of the relative position between the clutch housing 31 and vibration proofing cover 51 should lower, it would be difficult to suppress vibration of the first cylindrical portion 32.

For the above-mentioned reason, the fixation between the fixed portion 61 and bottom portion 41 is performed after surface treatment of the clutch housing 31. Here, the clutch housing 31 after surface treatment can be unsuitable for welding. However, welding is not used for fixation between the fixed portion 61 and bottom portion 41. In other words, the fixed portion 61 and bottom portion 41 are not fusion-joined together. The fixed portion 61 and bottom portion 41 are joined by non-welding means. Therefore, the fixed portion 61 and bottom portion 41 can easily be fixed together. Thus, where surface treatment of the clutch housing 31 is carried out, the centrifugal clutch 21 in this embodiment has particularly high utility.

In particular, when the surface treatment of the clutch housing 31 is nitriding treatment, the electric resistance of the clutch housing 31 is relatively high. Therefore, the clutch housing 31 after nitriding treatment is unsuitable for welding. For example, in order to weld the fixed portion 61 and bottom portion 41, a relatively high voltage is required. Thus, where nitriding treatment of the clutch housing 31 is carried out, the centrifugal clutch 21 in this embodiment has particularly high utility.

The vibration proofing cover 51 is surface-treated in a state not attached to the clutch housing 31 (step S6). The vibration proofing cover 51 is attached to the clutch housing 31 after the vibration proofing cover 51 is surface-treated (step S7). Consequently, after the surface treatment of the vibration proofing cover 51 and before the vibration proofing cover 51 is attached to the clutch housing 31, the dimensions of the vibration proofing cover 51 can be controlled with high accuracy. The accuracy of the relative position between the clutch housing 31 and vibration proofing cover 51 can therefore be secured conveniently. In other words, when attaching the vibration proofing cover 51 to the clutch housing 31, the positional adjustment of the clutch housing 31 and vibration proofing cover 51 can be performed with high accuracy. In particular, the accuracy of the relative position between the first cylindrical portion 32 and second cylindrical portion 52 can be secured conveniently. In other words, when attaching the vibration proofing cover 51 to the clutch housing 31, the positional adjustment of the first cylindrical portion 32 and second cylindrical portion 52 can be performed with high accuracy. For example, when the vibration proofing cover 51 is attached to the clutch housing 31, the first contact portions 55 and second contact portions 58 of the second cylindrical portion 52 can be made to appropriately contact the first cylindrical portion 32. For example, when the vibration proofing cover 51 is attached to the clutch housing 31, the first non-contact portions 57 and second non-contact portions 59 of the second cylindrical portion 52 can be appropriately separated from the first cylindrical portion 32. For example, when the vibration proofing cover 51 is attached to the clutch housing 31, the gaps 60 can be appropriately formed between the first cylindrical portion 32 and second cylindrical portion 52. As a result, the second cylindrical portion 52 can conveniently suppress vibration of the first cylindrical portion 32.

Especially, the surface treatment includes heat treatment. In the surface treatment, therefore, there is a possibility that the vibration proofing cover 51 may be distorted. It is difficult to correct the distortion of the vibration proofing cover 51 in a state where the vibration proofing cover 51 is attached to the clutch housing 31. Consequently, if the surface treatment of the vibration proofing cover 51 were carried out in the state where the vibration proofing cover 51 is attached to the clutch housing 31, it would be difficult to secure the accuracy of the relative position between the clutch housing 31 and vibration proofing cover 51. And if the accuracy of the relative position between the clutch housing 31 and vibration proofing cover 51 should lower, it would be difficult for the vibration proofing cover 51 to suppress vibration of the first cylindrical portion 32.

For the above-mentioned reason, the fixation between the fixed portion 61 and bottom portion 41 is performed after surface treatment of the vibration proofing cover 51. Here, the vibration proofing cover 51 after surface treatment can be unsuitable for welding. However, welding is not used for fixation between the fixed portion 61 and bottom portion 41. In other words, the fixed portion 61 and bottom portion 41 are not fusion-welded together. The fixed portion 61 and bottom portion 41 are joined by non-welding means. Therefore, the fixed portion 61 and bottom portion 41 can easily be fixed together. Thus, where surface treatment of the vibration proofing cover 51 is carried out, the centrifugal clutch 21 in this embodiment has particularly high utility.

In particular, when the surface treatment of the vibration proofing cover 51 is nitriding treatment, the electric resistance of the vibration proofing cover 51 is relatively high. Therefore, the vibration proofing cover 51 after nitriding treatment is unsuitable for welding. For example, in order to weld the fixed portion 61 and bottom portion 41, a relatively high voltage is required. Thus, where nitriding treatment of the vibration proofing cover 51 is carried out, the centrifugal clutch 21 in this embodiment has particularly high utility.

The initial length L71i of the projections 71 is larger than the thickness T61 of the fixed portion 61. Therefore, when the vibration proofing cover 51 is attached to the clutch housing 31 (step S7), the distal ends 71b of the projections 71 project from the fixed portion 61. Thus, the heads 72 can be formed conveniently.

The final length L71f of the projections 71 is substantially the same as the thickness T61 of the fixed portion 61. The heads 72 can therefore conveniently contact the fixed portion 61. The bottom portion 41 can also conveniently contact the fixed portion 61.

The outside diameter D72 of the heads 72 is larger than the inside diameter D65 of the bores 65. The heads 72 can thus conveniently press the fixed portion 61 on the bottom portion 41.

The depth L73 of the recesses 73 is smaller than the initial length L71i of the projections 71. Thus, the strength of the bottom portion 41 can be secured conveniently.

The inside diameter D73 of the recesses 73 is larger than the depth L73 of the recesses 73. Therefore, the depth L73 of the recesses 73 can easily be made small. Thus, the strength of the bottom portion 41 can be secured conveniently.

After the projections 71 are formed (step S2), the surface treatment of the clutch housing 31 is performed (step S3). That is, the projections 71 are formed before the clutch housing 31 is surface-treated. The projections 71 can therefore be formed easily. Specifically, the bottom portion 41 not surface-treated is put to plastic deformation. The plastic deformation of the bottom portion 41 can therefore be carried out easily.

In particular, when the surface treatment of the clutch housing 31 is nitriding treatment, the clutch housing 31 hardens by the surface treatment of the clutch housing 31. Thus, the external force for forming the projections 71 after the surface treatment is larger than the external force for forming the projections 71 before the surface treatment. It is therefore easier to form the projections 71 before the surface treatment than forming the projections 71 after the surface treatment. Thus, where nitriding treatment of the clutch housing 31 is carried out, the centrifugal clutch 21 in this embodiment has particularly high utility.

The bores 65 and second opening 62 are formed at the same time. The bores 65 and second opening 62 are formed by one plastic processing (press processing). This can conveniently prevent variations of the relative position between the bores 65 and second opening 62. Further, the number of steps of the plastic processing (press processing) can be reduced.

The second cylindrical portion 52 presses on part of the first cylindrical portion 32. Thus, the first cylindrical portion 32 and second cylindrical portion 52 contact each other with an appropriate frictional force. The frictional force between the first cylindrical portion 32 and second cylindrical portion 52 can effectively suppress vibration of the first cylindrical portion 32.

The straddled vehicle 1 includes the centrifugal clutch 21 described above. According to the straddled vehicle 1, the clutch housing 31 and vibration proofing cover 51 can be joined together appropriately.

This invention is not limited to the foregoing embodiment, but may be modified as follows:

(1) In the embodiment, the projections 71 and heads 72 are integrated with the bottom portion 41. The invention is not limited to this. The projections 71 and heads 72 may be elements separate from the bottom portion 41.

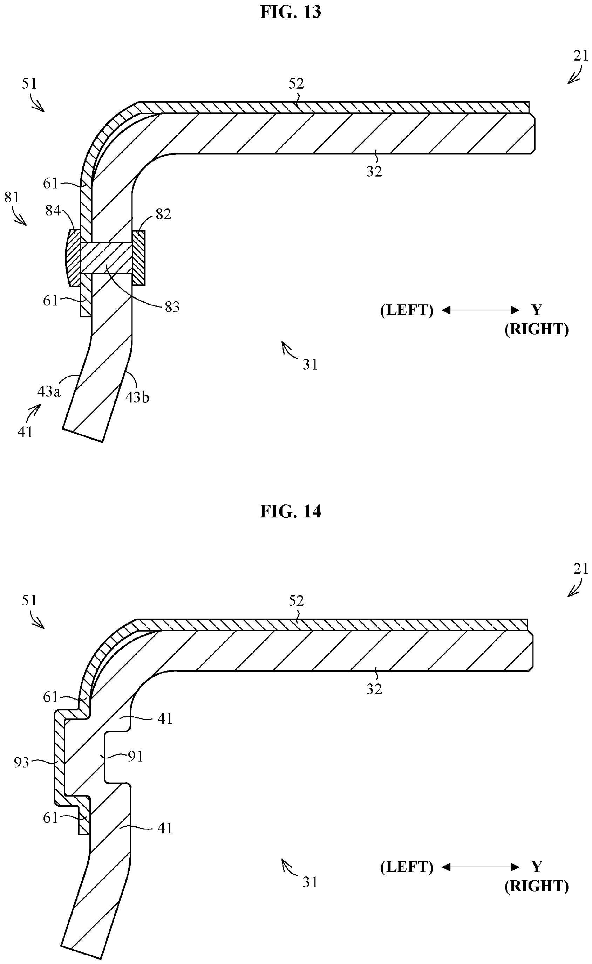

Fig. 13 is a sectional view illustrating crimps between the bottom portion 41 and fixed portion 61 in a modified embodiment. Components identical to those of the embodiment are shown with the same signs, and will not particularly be described.

The straddled vehicle 1 has one or more (e.g. six) rivets 81. The rivets 81 are elements separate from the bottom portion 41. The rivets 81 are elements separate also from the fixed portion 61. The fixed portion 61 is crimped to the bottom portion 41 by the rivets 81.

Each rivet 81 has a flange 82, a pin 83, and a head 84. The pin 83 is connected to the flange 82. The head 84 is connected to the pin 83. The pin 83 is also called a shaft or stem. The pin 83 penetrates the fixed portion 61. Further, the pin 83 penetrates the bottom portion 41. The head 84 presses the fixed portion 61 on the bottom portion 41.

Specifically, the pin 83 extends parallel to the axis A2. The flange 82, bottom portion 41, fixed portion 61, and head 84 are arranged in this order axially the axis A2. The fixed portion 61 contacts the bottom portion 41 and head 84. At least part of the head 84, when seen from the axis A2, overlaps both the fixed portion 61 and bottom portion 41.

The flange 82 contacts the bottom portion 41. The flange 82 contacts the second surface 43b of the bottom portion 41. The first surface 43a of the bottom portion 41 contacts the second surface 63b of the fixed portion 61. The first surface 63a of the fixed portion 61 contacts the head 84. At least part of the head 84 overlaps the flange 82, when seen from the axis A2.

The head 84 is formed after the vibration proofing cover 51 is attached to the clutch housing 31. The head 84 is formed by applying a load to the distal end of the pin 83.

(2) In the embodiment, the centrifugal clutch 21 includes the projections 71 and heads 72. The invention is not limited to this. The centrifugal clutch 21 may leave out the projections 71 and heads 72.

Fig. 14 is a sectional view illustrating crimps between the bottom portion 41 and fixed portion 61 in a modified embodiment. Components identical to those of the embodiment are shown with the same signs, and will not particularly be described.

The fixed portion 61 is crimped to the bottom portion 41. Specifically, the fixed portion 61 is crimped to the bottom portion 41 by plastic processing (press processing). The press processing is a mechanical clinching, for example. In the mechanical clinching, both the bottom portion 41 and the fixed portion 61 undergo plastic deformation.

Projections 91 are formed on the bottom portion 41 by plastic deformation of the bottom portion 41. Recesses 93 are formed in the fixed portion 61 by plastic deformation of the fixed portion 61. And concavo-convex joints are made between the projections 91 and recesses 93.

Here, the projections 91 and recesses 93 may be formed at the same time. The projections 91 and recesses 93 may be formed by one plastic processing (press processing). For example, in a stacked state of the bottom portion 41 and fixed portion 61, the press processing may be performed on both the bottom portion 41 and fixed portion 61.

Instead of forming the projections 91 on the bottom portion 41 and the recesses 93 in the fixed portion 61, the recesses 93 may be formed in the bottom portion 41 and projections 91 on the fixed portion 61.

(3) In the embodiment, the number of projections 71 is six. The number of heads 72 is six. The invention is not limited to this. The number of projections 71 may be any one of one to five, seven and more. The number of heads 72 may be any one of one to five, seven and more.

(4) In the embodiment, the bores 65 are substantially circular as seen from the axis A2. The invention is not limited to this. The bores 65 may be elongate holes, for example. The bores 65 may be oval as seen from the axis A2, for example. The bores 65 may be cutouts, for example. The bores 65 may be open to the second opening 62, for example. The bores 65 may be connected to the second opening 62, for example.

(5) In the embodiment, the surface treatment is nitriding treatment. The invention is not limited to this. The surface treatment may be soft nitriding treatment, for example. The surface treatment may be zinc plating, for example.

(6) In the embodiment, surface treatment is carried out for both the clutch housing 31 and the vibration proofing cover 51. The invention is not limited to this. For example, at least one of the clutch housing 31 and vibration proofing cover 51 may be surface-treated. For example, both the clutch housing 31 and vibration proofing cover 51 may not be surface-treated. For example, at least one of step S3 and step S6 may be omitted.

(7) The embodiment shows by way of example that the clutch housing 31 and vibration proofing cover 51 are metal, respectively. The invention is not limited to this. The clutch housing 31 may be made of a synthetic resin, for example. The vibration proofing cover 51 may be made of a synthetic resin, for example.

(8) In the embodiment, the bottom portion 41 has the first openings 42. The clutch housing 31 may have bores other than the first openings 42. For expediency, the bores other than the first openings 42 of the clutch housing 31 will be called first additional bores. The first additional bores are positioning bores, for example. The positioning bores are used, for example, in order to position the clutch housing 31 in a manufacturing process. The positioning bores are used in the step (step S7) of attaching the vibration proofing cover 51 to the clutch housing 31, for example. When the bottom portion 41 has the first additional bores, the first additional bores are formed as are the first openings 42, for example. The first additional bores are formed in step S2, for example.

(9) In the embodiment, the fixed portion 61 has the bores 65 and second opening 62. The vibration proofing cover 51 may have bores other than the bores 65 and second opening 62. For expediency, the bores other than the bores 65 and second opening 62 of the vibration proofing cover 51 will be called second additional bores. The second additional bores are positioning bores, for example. The positioning bores are used, for example, in order to position the vibration proofing cover 51 in a manufacturing process. The positioning bores are used in the step (step S7) of attaching the vibration proofing cover 51 to the clutch housing 31, for example. When the fixed portion 61 has the second additional bores, the second additional bores are formed as are the bores 65 and second opening 62, for example. The second additional bores are formed in step S5, for example.

(10) In the embodiment, part of the centrifugal shoes 22 (specifically the distal ends 22b of the centrifugal shoes 22) are movable radially outward of the axis A2. The invention is not limited to this. The whole centrifugal shoes 22 may be movable radially outward of the axis A2.

(11) In the embodiment, the centrifugal clutch 21 is connected to the speed changer 11. The invention is not limited to this. The centrifugal clutch 21 may be connected to other elements of the straddled vehicle 1 than the speed changer 11. In the embodiment, the centrifugal shoes 22 are revolvable about the axis A2 of the second output shaft 12 of the speed changer 11. The invention is not limited to this. The centrifugal shoes 22 may be revolvable about the axes of other shaft members. The centrifugal shoes 22 may be revolvable about the axes of other shaft members of the straddled vehicle 1 than the second output shaft 12. In the embodiment, the centrifugal clutch 21 is connected to the rear axle 10. The invention is not limited to this. The centrifugal clutch 21 may be connected to other elements of the straddled vehicle 1 than the rear axle 10.

(12) In the foregoing embodiment, the straddled vehicle 1 has been illustrated as an example of scooter type vehicles. The invention is not limited to this. The straddled vehicle 1 may be changed to vehicles of other types, such as the street type, sport type, off-road type, or a vehicle for irregular grounds (ALL-TERRAIN VEHICLE).

(13) In the foregoing embodiment, the number of front wheels 3 of the straddled vehicle 1 is one. The invention is not limited to this. The number of front wheels 3 of the straddled vehicle 1 may be two. In the foregoing embodiment, the number of rear wheels 9 of the straddled vehicle 1 is one. The invention is not limited to this. The number of rear wheels 9 of the straddled vehicle 1 may be two.

(14) In the foregoing embodiment, the straddled vehicle 1 includes the engine 6 (internal combustion engine) as power source. The invention is not limited to this. For example, the straddled vehicle 1 may have an electric motor as power source, besides the engine 6. For example, the straddled vehicle 1 may have an electric motor as power source, instead of the engine 6.

(15) The foregoing embodiment and each of the modified embodiments described in paragraphs (1) to (14) above may be further varied as appropriate by replacing or combining their constructions with the constructions of the other modified embodiments.

## Claims

1. A centrifugal clutch (21) comprising:
centrifugal shoes (22) revolvable about a first axis (A2) and movable by centrifugal force radially outward of the first axis (A2);
a clutch housing (31) having a first cylindrical portion (32) located radially outward of the first axis (A2) relative to the centrifugal shoes (22) to be capable of contacting and separating from the centrifugal shoes (22), and a bottom portion (41) extending from the first cylindrical portion (32) radially inward of the first axis (A2); and
a vibration proofing cover (51) having a second cylindrical portion (52) at least partially, preferably entirely, located radially outward of the first axis (A2) relative to the first cylindrical portion (32) and in contact with at least part of the first cylindrical portion (32), and a fixed portion (61) extending from the second cylindrical portion (52) radially inward of the first axis (A2),
**characterized in that**
the fixed portion is crimped to the bottom portion (41).

2. The centrifugal clutch (21) according to claim 1, wherein the centrifugal clutch (21) is obtained by fixing the fixed portion (61) to the bottom portion (41) by plastic processing.

3. The centrifugal clutch (21) according to claim 1 or 2, comprising:
pins (71, 83) penetrating the fixed portion (61); and
heads (72, 84) connected to the pins (71, 83) for pressing the fixed portion (61) on the bottom portion (41).

4. The centrifugal clutch (21) according to claim 3, wherein:
the pins (71, 83) extend parallel to the first axis (A2);
the bottom portion (41), the fixed portion (61), and the heads (72, 84) are arranged in the stated order axially of the first axis (A2);
the fixed portion (61) contacts the bottom portion (41) and the heads (72, 84); and
at least part of the heads (72, 84) overlap both the fixed portion (61) and the bottom portion (41) as seen from the first axis (A2).

5. The centrifugal clutch (21) according to claim 3 or 4, wherein the pins (71) and the heads (72) are integrated with the bottom portion (41).

6. The centrifugal clutch (21) according to claim 5, wherein the bottom portion (41) has a thickness (T41) larger than a thickness (T61) of the fixed portion (61).

7. The centrifugal clutch (21) according to claim 5 or 6, wherein:
the bottom portion (41) has recesses (73) arranged on back sides of the pins (71); and
the pins (71) are obtained by forming the pins (71) to project from the bottom portion (41) simultaneously with formation of the recesses (73).

8. The centrifugal clutch (21) according to claim 7, wherein the pins (71) have an outside diameter (D71) smaller than an inside diameter (D73) of the recesses (73).

9. The centrifugal clutch (21) according to claim 7 or 8, wherein the recesses (73) have a depth (L73) smaller than the thickness (T41) of the bottom portion (41).

10. The centrifugal clutch (21) according to any one of claims 3 to 9, wherein the heads (72, 84) are formed by applying load to distal ends (71b) of the pins (71, 83).

11. The centrifugal clutch (21) according to claim 10, wherein the heads (72, 84) are formed by forming the heads (72, 84) after the vibration proofing cover (51) is attached to the clutch housing (31).

12. The centrifugal clutch (21) according to any one of claims 1 to 11, wherein at least one of the clutch housing (31) and the vibration proofing cover (51) is surface-treated.

13. The centrifugal clutch (21) according to any one of claims 1 to 12, wherein:
the clutch housing (31) is formed by being surface-treated in a state not attached to the vibration proofing cover (51); and
the centrifugal clutch (21) is obtained by the vibration proofing cover (51) being attached to the clutch housing (31) after the clutch housing (31) is surface-treated, and/or
wherein:
the vibration proofing cover (51) is formed by being surface-treated in a state not attached to the clutch housing (31); and
the centrifugal clutch (21) is obtained by the vibration proofing cover (51) being attached to the clutch housing (31) after the vibration proofing cover (51) is surface-treated.

14. A straddled vehicle (1) comprising the centrifugal clutch (21) according to any one of claims 1 to 13.

15. A method for manufacturing a centrifugal clutch according to any of claims 1 to 13, wherein the fixed portion (61) is fixed to the bottom portion (41) by plastic processing.

## Patentansprüche

1. Eine Zentrifugalkupplung (21), umfassend:
Zentrifugalschuhe (22), die um eine erste Achse (A2) drehbar sind und durch die Zentrifugalkraft radial nach außen von der ersten Achse (A2) beweglich sind;
ein Kupplungsgehäuse (31), das einen ersten zylindrischen Abschnitt (32), der radial außerhalb der ersten Achse (A2) relativ zu den Zentrifugalschuhen (22) gelegen ist, um in der Lage zu sein, die Zentrifugalschuhe (22) zu kontaktieren und sich von ihnen zu separieren, und einen Bodenabschnitt (41) aufweist, der sich von dem ersten zylindrischen Abschnitt (32) radial nach innen von der ersten Achse (A2) erstreckt; und
eine vibrationsbeständige Abdeckung (51), die einen zweiten zylindrischen Abschnitt (52), der zumindest teilweise, vorzugsweise gesamt, radial außerhalb der ersten Achse (A2) relativ zu dem ersten zylindrischen Abschnitt (32) gelegen ist, und in Kontakt mit zumindest einem Teil des ersten zylindrischen Abschnitts (32) ist, und einen festen Abschnitt (61) aufweist, der sich von dem zweiten zylindrischen Abschnitt (52) radial nach innen von der ersten Achse (A2) erstreckt, **dadurch gekennzeichnet, dass**
der feste Abschnitt an den Bodenabschnitt (41) gecrimpt ist.

2. Die Zentrifugalkupplung (21) nach Anspruch 1, wobei die Zentrifugalkupplung (21) durch Befestigen des festen Abschnitts (61) an dem Bodenabschnitt (41) durch plastische Bearbeitung erhalten ist.

3. Die Zentrifugalkupplung (21) nach Anspruch 1 oder 2, umfassend:
Stifte (71, 83), die den festen Abschnitt (61) durchdringen; und
Köpfe (72, 84), die mit den Stiften (71, 83) verbunden sind, um den festen Abschnitt (61) auf den Bodenabschnitt (41) zu drücken.

4. Die Zentrifugalkupplung (21) nach Anspruch 3, wobei:
die Stifte (71, 83) sich parallel zur ersten Achse (A2) erstrecken;
der Bodenabschnitt (41), der feste Abschnitt (61) und die Köpfe (72, 84) in der angegebenen Reihenfolge axial zur ersten Achse (A2) angeordnet sind;
der feste Abschnitt (61) den Bodenabschnitt (41) und die Köpfe (72, 84) kontaktiert; und
zumindest ein Teil der Köpfe (72, 84) sowohl den festen Abschnitt (61) als auch den Bodenabschnitt (41) von der ersten Achse (A2) aus gesehen überlappt.

5. Die Zentrifugalkupplung (21) nach Anspruch 3 oder 4, wobei die Stifte (71) und die Köpfe (72) mit dem Bodenabschnitt (41) integriert sind.

6. Die Zentrifugalkupplung (21) nach Anspruch 5, wobei der Bodenabschnitt (41) eine Dicke (T41) aufweist, die größer ist als eine Dicke (T61) des festen Abschnitts (61).

7. Die Zentrifugalkupplung (21) nach Anspruch 5 oder 6, wobei:
der Bodenabschnitt (41) Vertiefungen (73) aufweist, die an den Rückseiten der Stifte (71) angeordnet sind; und
die Stifte (71) dadurch erhalten sind, dass die Stifte (71) gleichzeitig mit der Bildung der Vertiefungen (73) so gebildet werden, dass sie von dem Bodenabschnitt (41) vorstehen.

8. Die Zentrifugalkupplung (21) nach Anspruch 7, wobei die Stifte (71) einen Außendurchmesser (D71) aufweisen, der kleiner ist als ein Innendurchmesser (D73) der Vertiefungen (73).

9. Die Zentrifugalkupplung (21) nach Anspruch 7 oder 8, wobei die Vertiefungen (73) eine Tiefe (L73) aufweisen, die kleiner ist als die Dicke (T41) des Bodenabschnitts (41).

10. Die Zentrifugalkupplung (21) nach einem der Ansprüche 3 bis 9, wobei die Köpfe (72, 84) durch Aufbringen einer Last auf distalen Enden (71b) der Stifte (71, 83) gebildet sind.

11. Die Zentrifugalkupplung (21) nach Anspruch 10, wobei die Köpfe (72, 84) gebildet sind, indem die Köpfe (72, 84) gebildet werden, nachdem die vibrationsbeständige Abdeckung (51) an dem Kupplungsgehäuse (31) angebracht ist.

12. Die Zentrifugalkupplung (21) nach einem der Ansprüche 1 bis 11, wobei zumindest eines von dem Kupplungsgehäuse (31) und der vibrationsdämpfenden Abdeckung (51) oberflächenbehandelt ist.

13. Die Zentrifugalkupplung (21) nach einem der Ansprüche 1 bis 12, wobei:
das Kupplungsgehäuse (31) gebildet ist, indem es in einem nicht an der vibrationsbeständigen Abdeckung (51) angebrachten Zustand oberflächenbehandelt ist; und
die Zentrifugalkupplung (21) dadurch erhalten ist, dass die vibrationsbeständige Abdeckung (51) an dem Kupplungsgehäuse (31) angebracht wird, nachdem das Kupplungsgehäuse (31) oberflächenbehandelt wurde, und/oder
wobei:
die vibrationsbeständige Abdeckung (51) gebildet ist, indem sie in einem nicht an dem Kupplungsgehäuse (31) angebrachten Zustand oberflächenbehandelt ist; und
die Zentrifugalkupplung (21) dadurch erhalten ist, dass die vibrationsbeständige Abdeckung (51) an dem Kupplungsgehäuse (31) angebracht wird, nachdem die vibrationsbeständige Abdeckung (51) oberflächenbehandelt wurde.

14. Ein Grätschsitzfahrzeug (1) umfassend die Zentrifugalkupplung (21) nach einem der Ansprüche 1 bis 13.

15. Ein Verfahren zur Herstellung einer Zentrifugalkupplung nach einem der Ansprüche 1 bis 13, wobei der feste Abschnitt (61) durch plastische Bearbeitung am Bodenabschnitt (41) befestigt wird.

## Revendications

1. Embrayage centrifuge (21) comprenant :
des masselottes centrifuges (22) mobiles en rotation autour d'un premier axe (A2) et mobiles par force centrifuge radialement vers l'extérieur du premier axe (A2) ;
un boîtier d'embrayage (31) présentant une première partie cylindrique (32) située radialement vers l'extérieur du premier axe (A2) par rapport aux masselottes centrifuges (22) pour être en mesure d'entrer en contact avec les masselottes centrifuges (22) et de s'en séparer, et une partie de fond (41) s'étendant depuis la première partie cylindrique (32) radialement vers l'intérieur du premier axe (A2) ; et
un capot anti-vibration (51) présentant une deuxième partie cylindrique (52) au moins partiellement, de préférence entièrement, située radialement vers l'extérieur du premier axe (A2) par rapport à la première partie cylindrique (32) et en contact avec au moins une partie de la première partie cylindrique (32), et une partie fixe (61) s'étendant depuis la deuxième partie cylindrique (52) radialement vers l'intérieur du premier axe (A2), **caractérisé en ce que**
la partie fixe est sertie sur la partie de fond (41).

2. L'embrayage centrifuge (21) selon la revendication 1, dans lequel l'embrayage centrifuge (21) est obtenu en fixant la partie fixe (61) à la partie de fond (41) par traitement plastique.

3. L'embrayage centrifuge (21) selon la revendication 1 ou 2, comprenant :
des tiges (71, 83) pénétrant la partie fixe (61) ; et
des têtes (72, 84) connectées aux tiges (71, 83) pour presser la partie fixe (61) sur la partie de fond (41).

4. L'embrayage centrifuge (21) selon la revendication 3, dans lequel :
les tiges (71, 83) s'étendant parallèlement au premier axe (A2) ;
la partie de fond (41), la partie fixe (61) et les têtes (72, 84) sont disposées dans l'ordre énoncé axialement du premier axe (A2) ;
la partie fixe (61) entre en contact avec la partie de fond (41) et les têtes (72, 84) ; et
au moins une partie des têtes (72, 84) chevauche la partie fixe (61) et la partie de fond (41) telles que visualisées depuis le premier axe (A2).

5. L'embrayage centrifuge (21) selon la revendication 3 ou 4, dans lequel les tiges (71) et les têtes (72) sont intégrées à la partie de fond (41).

6. L'embrayage centrifuge (21) selon la revendication 5, dans lequel la partie de fond (41) présente une épaisseur (T41) plus importante qu'une épaisseur (T61) de la partie fixe (61).

7. L'embrayage centrifuge (21) selon la revendication 5 ou 6, dans lequel :
la partie de fond (41) présente des cavités (73) disposées sur des côtés arrière des tiges (71) ; et
les tiges (71) sont obtenues en formant les tiges (71) pour se projeter depuis la partie de fond (41) simultanément avec une formation des cavités (73).

8. L'embrayage centrifuge (21) selon la revendication 7, dans lequel les tiges (71) présentent un diamètre extérieur (D71) plus important qu'un diamètre intérieur (D73) des cavités (73).

9. L'embrayage centrifuge (21) selon la revendication 7 ou 8, dans lequel les cavités (73) présentent une profondeur (L73) moins importante que l'épaisseur (T41) de la partie de fond (41).

10. L'embrayage centrifuge (21) selon l'une quelconque des revendications 3 à 9, dans lequel les têtes (72, 84) sont formées en appliquant une charge à des extrémités distales (71b) des tiges (71, 83).

11. L'embrayage centrifuge (21) selon la revendication 10, dans lequel les têtes (72, 84) sont formées en formant les têtes (72, 84) après que le capot anti-vibration (51) est fixé au boîtier d'embrayage (31).

12. L'embrayage centrifuge (21) selon l'une quelconque des revendications 1 à 11, dans lequel au moins un du boîtier d'embrayage (31) et du capot anti-vibration (51) est traité en surface.

13. L'embrayage centrifuge (21) selon l'une quelconque des revendications 1 à 12, dans lequel :
le boîtier d'embrayage (31) est formé en étant traité en surface dans un état non fixé au capot anti-vibration (51) ; et
l'embrayage centrifuge (21) est obtenu par le capot anti-vibration (51) fixé au boîtier d'embrayage (31) après que le boîtier d'embrayage (31) est traité en surface, et/ou
dans lequel :
le capot anti-vibration (51) est formé en étant traité en surface dans un état non fixé au boîtier d'embrayage (31) ; et
l'embrayage centrifuge (21) est obtenu par le capot anti-vibration (51) fixé au boîtier d'embrayage (31) après que capot anti-vibration (51) est traité en surface.

14. Véhicule à enfourcher (1), comprenant l'embrayage centrifuge (21) selon l'une quelconque des revendications 1 à 13.

15. Procédé de fabrication d'un embrayage centrifuge selon l'une quelconque des revendications 1 à 13, dans lequel la partie fixe (61) est fixée à la partie de fond (41) par traitement plastique.
